# EUROPÄISCHE PATENTSCHRIFT

(11) **EP 2 990 280 B1**
(45) Veröffentlichungstag und Bekanntmachung des Hinweises auf die Patenterteilung: **21.11.2018**
(21) Anmeldenummer: 14182904.4
(22) Anmeldetag: 29.08.2014
(51) Int. Cl.: B60T 17/04, F16L 33/22, F16L 35/00, F16L 37/084, F16L 37/12

(54) **ANORDNUNG MIT EINER FLUIDISCHEN LEITUNG UND EINEM KUPPLUNGSKOPF**
ASSEMBLY WITH A FLUID LINE AND A COUPLING HEAD
SYSTÈME DOTÉ D'UNE CONDUITE FLUIDIQUE ET TÊTE DE COUPLAGE

(43) Veröffentlichungstag der Anmeldung: 02.03.2016
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- EP-A1- 1 878 962
- DE-A1- 19 740 226
- DE-A1-102005 047 835
- DE-A1-102009 048 446
- US-A- 5 865 329
- US-A1- 2014 083 543
- US-B1- 6 637 781

## Beschreibung

### TECHNISCHES GEBIET DER ERFINDUNG

Die Erfindung betrifft eine Anordnung mit einer fluidischen Leitung und einem Kupplungskopf zur pneumatischen Verbindung eines Zugfahrzeugs und eines Anhängers oder zur pneumatischen Verbindung von zwei Anhängern mit den Merkmalen des Oberbegriffs von Patentanspruch 1. Insbesondere kann eine derartige Anordnung zur Verbindung einer Bremssteuerleitung oder einer Vorratsleitung eines Zugfahrzeugs mit einer pneumatischen Bremsanlage eines Anhängers zum Einsatz kommen.

### STAND DER TECHNIK

Zur fluidischen Verbindung einer fluidischen Leitung mit einer Anschlussöffnung eines Kupplungskopfes ist es bekannt, dass die fluidische Leitung ein Kopplungselement besitzt, über das ein fluidisches Leitungsteil mit einem die Anschlussöffnung aufweisenden Gehäuse des Kupplungskopfes gekoppelt wird. Dazu weist das Gehäuse üblicherweise einen Anschlussstutzen mit einem Innengewinde auf, wobei das Kopplungselement mit einem entsprechenden Außengewinde ausgestattet ist, so dass das Kopplungselement in den Anschlussstutzen geschraubt werden kann. Eine derartige Kopplung ist beispielsweise aus den Dokumenten DE 199 31 162 A1 und DE 1 080 875 A bekannt.

In DE 10 2009 048 446 A1 ist ein Kupplungskopf zur pneumatischen Verbindung der Bremsanlagen eines Zugfahrzeugs und eines Anhängers offenbart, wobei der Kupplungskopf ein als Spritzgussformling aus Kunststoff ausgebildetes Gehäuse mit einem Anschluss für ein Druckluftleitung aufweist. Die Druckluftleitung erstreckt sich durch eine Verstärkungshülse, die integraler Bestandteil des Gehäuses ist, den Anschluss ausbildet und die Druckluftleitung im Bereich des Anschlusses verstärkt, und ragt mit ihrem freien Ende in eine Anschlussbohrung des Gehäuses hinein. Die Druckluftleitung ist stoffschlüssig mit dem Gehäuse und der Verstärkungshülse, die als Spritzgussformling hergestellt sind, verbunden. Dabei soll die stoffschlüssige Verbindung insbesondere während des Spritzgießens des Spritzgussformlings hergestellt werden, indem die Druckluftleitung im Bereich der Verstärkungshülse mit dem Gehäuse umspritzt wird.

Die nicht gattungsgemäße Druckschrift US 2014/0083543 A1 beschreibt eine Schnellverbindung, über welche ein Verbraucher, hier ein mit Druckluft betriebenes Werkzeug, an eine Versorgungsleitung angeschlossen werden kann. Zwischen einer mit der Versorgungsleitung verbundenen Primärleitung des Schnellverbindungselements und einer mit dem Werkzeug verbundenen Sekundärleitung ist ein 2/2-Wegeventil angeordnet, über welches die Druckluftversorgung des Werkzeugs aktiviert und deaktiviert werden kann. Die Betätigung des 2/2-Wegeventils erfolgt über einen federbeaufschlagten Betätigungshebel, mit dessen manueller Betätigung entgegen der Wirkung der Federbeaufschlagung das 2/2-Wegeventil von seiner Durchlassstellung in eine Sperrstellung überführt wird. Gleichzeitig mit der Herbeiführung der Sperrstellung wird ein gedrosselter Entlüftungskanal mit der Sekundärleitung verbunden. Der Anschluss eines zu dem Werkzeug führenden Schlauches an die Sekundärleitung erfolgt über einen Anschlussstecker, welcher in eine korrespondierende Anschlussöffnung des Schnellverbindungselements, in welche auch die Sekundärleitung mündet, einsteckbar ist. In eingestecktem Zustand ist der Anschlussstecker in dem Schnellverbindungselement durch einen Formschluss einer Verriegelungskugel, welche radial außenliegend an einer Sicherungshülse abgestützt ist, mit einer Nut des Anschlusssteckers gesichert. Mit der Betätigung des Betätigungshebels betätigt ein Fortsatz des Betätigungshebels auch die Sicherungshülse, womit der Formschluss zwischen der Verriegelungskugel und der Nut des Anschlusssteckers beseitigt wird und der Anschlussstecker aus dem Schnellverbindungselement entfernt werden kann. Da über die Betätigung des Betätigungshebels gleichzeitig dafür Sorge getragen ist, dass einerseits das 2/2-Wegeventil von der Durchlassstellung in die Sperrstellung überführt wird und eine Verbindung der Sekundärleitung mit dem gedrosselten Entlüftungskanal geschaffen wird und andererseits die Verriegelung des Anschlusssteckers in dem Schnellverbindungselement beseitigt wird, kann die Leitung zwischen dem Schnellverbindungselement und dem Werkzeug über den Entlüftungskanal entlüftet werden, bevor die Entnahme des Anschlusssteckers aus dem Schnellverbindungselement erfolgt. Hierdurch kann ein allmählicher Druckabbau vor dem Lösen des Werkzeugs von dem Schnellverbindungselement erzielt werden, womit ein unerwünschter "Entlüftungsknall" vermieden werden kann. Ohne manuelle Betätigung des Betätigungshebels führt ein etwaiger Druck in der Versorgungsleitung zur Rückstellung des 2/2-Wegeventils in die Durchlassstellung, womit für über den Anschlussstecker angeschlossenes Werkzeug die Druckluftversorgung bereitgestellt wird. Ist allerdings für anliegenden Druck in der Versorgungsleitung kein Werkzeug an dem Schnellverbindungselement angeschlossen, tritt die Druckluft auf der Versorgungsleitung über das Schnellverbindungselement in die Umgebung aus, so dass die Druckluftversorgung durch anderweitige Maßnahmen, insbesondere manuelles Deaktivieren der Druckluftversorgung, unterbrochen werden muss.

Auch die Druckschrift DE 10 2005 047 835 A1 offenbart einen Schnellverbindungsstecker eines Typs, welcher auch als "Push-to-Connect-Stecker" bezeichnet wird. Der Push-to-Connect-Stecker weist ein Einsteckteil auf, welches eine Durchgangsbohrung besitzt und auf dessen freien Endbereich eine Leitung aufsteckbar ist. Des Weiteren verfügt der Push-to-Connect-Stecker über ein Aufnahmeteil, mit welchem das Einsteckteil über eine Verriegelungseinrichtung verbunden ist. Der derart gebildete Push-to-Connect-Stecker ist dann in einen Anschluss eines Gehäuses, dessen Verwendungszweck in der Druckschrift nicht näher spezifiziert ist, mit dem Gehäuse verbindbar. Die Kopplung der Leitung mit dem Anschluss des Gehäuses erfolgt somit unter Zwischenschaltung mehrerer Teile, nämlich des Aufnahmeteils und des Einsteckteils.

Auch die Druckschrift EP 1 878 962 A1 beschreibt einen Push-to-Connect-Stecker, bei welchem ein hülsenartiges, radial innen liegend die Leitung aufnehmendes Innenteil mit einem ebenfalls hülsenartigen Außenteil ausgebildet ist.

Die Druckschrift US 5,865,329 betrifft einen gattungsgemäßen Kupplungskopf, welcher hier als "glad-hand coupler" bezeichnet ist. Bei diesem besitzt das Gehäuse des Kupplungskopfes eine integral ausgebildete Hülse, deren Mantelfläche mit über Stufen miteinander verbundenen Mantelflächen eines Kegelstumpfes gebildet ist und auf welche eine Leitung aufsteckbar und mit einer Klemme oder einem anderweitigen Befestigungselement sicherbar ist.

Die Druckschrift DE 197 40 226 A1 betrifft ebenfalls ein Schnellkupplungselement, hierfür eine hydraulische Bremsleitung.

### AUFGABE DER ERFINDUNG

Der Erfindung liegt die Aufgabe zugrunde, einen Kupplungskopf vorzuschlagen, bei dem das Anschließen einer fluidischen Leitung an einen Anschluss des Kupplungskopfes vereinfacht ist.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht auf der Erkenntnis, dass es nicht zwingend erforderlich ist,
- entweder ein Kopplungselement einer fluidischen Leitung über eine Schraubverbindung mit einem Gehäuse eines Kupplungskopfes zu verbinden
- oder auf ein Kopplungselement der fluidischen Leitung zu verzichten und die fluidische Leitung unmittelbar mit dem Gehäuse zu verbinden.

Vielmehr besteht auch eine andere Befestigungs- oder Kopplungsmöglichkeit, welche einerseits zulässt, dass der Kupplungskopf flexibel eingesetzt und insbesondere unabhängig von einer anzuschließenden fluidischen Leitung montiert und mit verschiedenartigen fluidischen Leitungen verbunden werden kann, und welche andererseits den Anforderungen im Betrieb genügt, beispielsweise den rauen Einsatzbedingungen eines Kupplungskopfes im Betrieb eines Nutzfahrzeuges, für welchen sich trotz Vibrationen die Kopplung des Kopplungselements der fluidischen Leitung mit dem Gehäuse nicht lösen darf.

Weiterhin haben der Erfindung zugrunde liegende Überlegungen dazu geführt, dass die aus dem Stand der Technik bekannten Vorgehensweisen zur Verbindung einer fluidischen Leitung mit einem Kupplungskopf Nachteile mit sich bringen können:
- Bei der Verwendung eines Kopplungselements der fluidischen Leitung, das über eine Schraubverbindung mit dem Gehäuse des Kupplungskopfes gekoppelt wird, müssen das Gehäuse und das Kopplungselement mit entsprechenden Gewinden versehen werden, was den Herstellungsaufwand erhöht. Dies ist von besonderer Bedeutung, wenn für das Gehäuse und/oder das Kopplungselement kein hochfestes Material oder Metall verwendet wird. Beispielsweise ist die Kopplung des Kopplungselements mit dem Gehäuse über eine Schraubverbindung nicht möglich, wenn das Gehäuse und/oder das Kopplungselement aus Kunststoff hergestellt sind, da das in den Kunststoff eingeschnittene Gewinde versagen würde oder zumindest die Beanspruchungen nicht dauerhaft aushalten würde.
- Wird auf ein Kopplungselement der fluidischen Leitung verzichtet und ein fluidisches Leitungsteil direkt mit dem Gehäuse des Kupplungskopfes stoffschlüssig verbunden, kann zwar eine sichere Verbindung auch mit einem aus Kunststoff hergestellten Gehäuse gewährleistet werden. Allerdings müssen bei dieser Vorgehensweise Einschränkungen hinsichtlich der Einsatzmöglichkeiten hingenommen werden. Insbesondere lässt sich eine stoffschlüssige Verbindung des fluidischen Leitungsteils mit dem Gehäuse nicht oder zumindest nicht ohne Beschädigung oder Zerstörung des Gehäuses lösen, d. h. ein derartiger Kupplungskopf eignet sich im Regelfall nur zur einmaligen Verwendung. Im Fall eines Defekts, einer Beschädigung o. ä., welcher oder welche einen Austausch erfordert, sind sowohl der Kupplungskopf als auch das Leitungsteil auszutauschen.

Erfindungsgemäß wird eine neue Art der Kopplung des Kopplungselements der fluidischen Leitung mit dem Gehäuse und so der fluidischen Verbindung der fluidischen Leitung mit dem Kupplungskopf vorgeschlagen, indem erfindungsgemäß das Kopplungselement der fluidischen Leitung über eine Rast- oder Sperrverbindung und unter Ausbildung einer dichten Verbindung zwischen der Leitung und dem Gehäuse mit dem Gehäuse gekoppelt ist. Der Einsatz einer Rast- oder Sperrverbindung zur Kopplung des Kopplungselements der fluidischen Leitung mit dem Gehäuse des Kupplungskopfes ist beispielsweise vorteilhaft hinsichtlich der Montage des Kopplungselements mit dem Gehäuse und/oder hinsichtlich der Demontage des Kopplungselements von dem Gehäuse. Insbesondere wenn es sich um eine lösbare Verbindung des Kopplungselements mit dem Gehäuse handelt, ist ein einfacher Austausch beispielsweise des Kupplungskopfes möglich, ohne dass auch das Kopplungselement und die mit dem Kopplungselement gebildete fluidischen Leitung ausgetauscht werden müssen. Für einen erhöhten Abreißschutz im Betrieb kann es jedoch auch vorteilhaft sein, wenn es sich bei der Rast- oder Sperrverbindung um eine dauerhafte Verbindung handelt, die nicht oder nur unter Aufbringung von sehr großen Lösekräften gelöst werden kann. Weiterhin ermöglicht die Kopplung des Kopplungselements mit dem Gehäuse über eine Rast- oder Sperrverbindung auch die Fertigung des Kopplungselements und/oder des Gehäuses aus Kunststoff, ohne dass hierdurch Einschränkungen hinsichtlich der Sicherheit oder Dauerhaftigkeit der Kopplung in Kauf genommen werden müssen.

Für die Ausgestaltung der erfindungsgemäßen Rast- oder Sperrverbindung gibt es vielfältige Lösungen. Gemäß einer bevorzugten Ausgestaltung der Erfindung weist die Rast- oder Sperrverbindung ein Rast- oder Sperrelement auf, das elastisch verformbar und/oder bewegbar, insbesondere verschiebbar ist, wobei dieser Freiheitsgrad für die Verformbarkeit und/oder Bewegbarkeit zumindest eine Komponente quer zur Fügerichtung besitzt. Das Rast- oder Sperrelement hintergreift zum Bilden der Rast oder Sperrverbindung einen geneigt zu der Fügerichtung orientierten Absatz, so dass das Kopplungselement zumindest in einer Richtung gegenüber einer Bewegung, insbesondere einer Verschiebung in Fügerichtung, gesichert ist.

Im Rahmen der vorliegenden Erfindung wird unter einem Rastelement, welches für eine Rastverbindung in Wechselwirkung mit einem Absatz tritt, insbesondere ein Verbindung verstanden, bei welcher das Rastelement elastisch verformt oder bewegt wird und angesichts einer elastischen Verformung den Absatz hintergreift oder hinter diesen "einschnappt". Werden hinreichende Lösekräfte auf die Rastverbindung ausgeübt, führt dies, insbesondere durch Ein- und Ausführschrägen an dem Rastelement und/oder dem Absatz, zu einer elastischen Verformung oder Bewegung des Rastelements mit einem Lösen der Rastverbindung, ohne dass es zu einer Beschädigung des Rastelements und/oder dem Absatz kommt.

Hingegen wird im Rahmen der vorliegenden Erfindung unter einer Sperrverbindung insbesondere eine Kopplung oder Verbindung verstanden, bei welcher ein Sperrelement nach Hintergreifen des Absatzes, unter Umständen auf ähnlicher Weise mit elastischer Verformung oder Bewegung wie zuvor für das Rastelement beschrieben, auch bei Aufbringung von in Demontagerichtung wirkenden Lösekräften auf die derart gebildete Sperrverbindung nicht gelöst wird. Vielmehr setzt das Lösen der Sperrverbindung über Lösekräfte, die ausschließlich in Demontagerichtung auf das Sperrelement oder den Absatz wirken, die plastische Verformung oder Zerstörung des Sperrelements, eines das Sperrelement haltenden Rast- oder Sperrarms und/oder des Absatzes oder zusätzliche Lösemaßnahmen voraus. Um die Sperrverbindung lösen zu können, ohne dass dazu eine plastische Verformung oder Zerstörung in Kauf genommen werden muss, muss eine separate Betätigung des Sperrelements mit Lösekräften erfolgen, welche nicht oder zumindest nicht nur in Demontagerichtung wirken, sondern auch quer dazu.

Wie bereits zuvor erläutert, kann eine Verbindung zwischen dem Rastelement und dem Absatz bei Aufbringung hinreichender Lösekräfte durchaus durch elastische Verformung oder Bewegung des Rastelements gelöst werden. Sind die Kontaktflächen zwischen Sperrelement und Absatz quer zur Fügerichtung orientiert, führt die Aufbringung von Lösekräften nicht zu einer elastischen Verformung oder Bewegung des Sperrelements, so dass tatsächlich die Verbindung nicht ohne Weiteres durch Aufbringung von Lösekräften gelöst werden kann. Der Unterschied, ob eine Rast- oder eine Sperrverbindung gebildet ist, kann somit in der Gestaltung der Anlageflächen zwischen Rast- oder Sperrelement und Absatz bestehen.

Die zum Lösen der Rast- oder Sperrverbindung erforderlichen Lösekräfte hängen dabei insbesondere ab von
- den Kräften, die zum elastischen Verformen und/oder Bewegen des Rast- oder Sperrelements erforderlich sind, also beispielsweise von einer Steifigkeit des hierzu eingesetzten Materials oder der Länge eines abstützenden Arms oder Federelements,
- der Geometrie des Rast- oder Sperrelements und/oder des Absatzes, insbesondere einer Neigung der Kontaktflächen zwischen Absatz und Rast- oder Sperrelement,
- dem Ausmaß des Greifens des Rast- oder Sperrelements hinter den Absatz und/oder
- einer Reibung zwischen Absatz und Rast- oder Sperrelement.

Für die Anordnung des Rast- oder Sperrelements und des Absatzes gibt es im Rahmen der Erfindung insbesondere zwei Varianten: Das Rast- oder Sperrelement kann von dem Gehäuse des Kupplungskopfes ausgebildet oder an diesem gehalten sein. Beispielsweise kann das Gehäuse ein quer zu der Fügerichtung nach außen elastisch verformbares oder bewegbares, insbesondere verschiebbares, Rast- oder Sperrelement aufweisen, das die Rast- oder Sperrverbindung mit einer quer zu der Fügerichtung verlaufenden Ausnehmung wie einer Umfangsnut des Kopplungselements ausbildet.

Für eine andere erfindungsgemäße Variante ist das Rast- oder Sperrelement von dem Kopplungselement der fluidischen Leitung ausgebildet, welches einen Absatz des Anschlusses des Gehäuses des Kupplungskopfes hintergreift, beispielsweise eine quer zu der Fügerichtung verlaufende Rastnut. Diese Anordnung kann den Vorteil haben, dass das Rast- oder Sperrelement, welches im Vergleich zu dem Absatz unter Umständen anfälliger ist für Beschädigungen, nicht von dem Kupplungskopf ausgebildet ist, dessen Austausch bei einer Beschädigung des Rast- oder Sperrelements mit größerem Aufwand und/oder mit höheren Kosten verbunden sein könnte.

Konkret ist gemäß einer bevorzugten Ausführungsform vorgesehen, dass das Rast- oder Sperrelement eine Rast- oder Sperrnase ist, die am Außenumfang des Kopplungselements der fluidischen Leitung ausgebildet ist, während der Absatz von dem Anschluss des Gehäuse des Kupplungskopfes ausgebildet ist. Die Rast- oder Sperrnase kann beispielsweise endseitig an einen elastisch verformbaren Rast- oder Sperrarm des Kopplungselements angeformt sein. Der Absatz kann von einer Innenfläche des Gehäuses, welche eine den Anschluss für die fluidische Leitung bildende Anschlussausnehmung begrenzt, gebildet sein. Der Absatz kann aber auch am Außenumfang eines Anschlussstutzens des Gehäuses ausgebildet sein, über den das Kopplungselement und die mit diesem gebildete fluidische Leitung mit dem Gehäuse gekoppelt werden kann.

Das Rast- oder Sperrelement kann integral mit dem Gehäuse oder dem Kopplungselement der fluidischen Leitung gebildet sein. Das Rast- oder Sperrelement kann aber auch stoffschlüssig mit einem Grundkörper des Gehäuses oder des Kopplungselements verbunden sein.

Gemäß einer Ausführungsform der Erfindung ist das Rast- oder Sperrelement ein Sicherungselement, das zum Bilden der Rast- oder Sperrerfindung in eine Vertiefung eingreift, welche den Absatz aufweist. Bei dem Sicherungselement kann es sich beispielsweise um einen Sicherungsring, einen federbeaufschlagten Stift, einen Passstift, eine Madenschraube o. ä. handeln. Die den Absatz aufweisende Vertiefung kann beispielsweise eine Rast- oder Sperrnut sein, die am Außenumfang des Kopplungselements und/oder an einer den Anschluss begrenzenden Innenfläche des Gehäuses ausgebildet ist. Dabei kann es sich bei der Rast- oder Sperrnut um eine in Umfangsrichtung teilweise oder vollständig umlaufende Nut handeln. Es kann jedoch auch eine punktuelle Vertiefung eingesetzt werden, in die z. B ein federbeaufschlagter Stift eingreift oder in die eine Madenschraube hineinragt. Insbesondere kann bei dem Einsatz einer punktuellen Vertiefung auch durch die Rast- oder Sperrverbindung eine Orientierung des Kopplungselements relativ zu dem Gehäuse des Kupplungskopfes vorgegeben und aufrechterhalten werden, da das Rast- oder Sperrelement nur bei der vorgegebenen Orientierung in die Vertiefung eingreifen und somit die Kopplung auch nur bei der vorgegebenen Orientierung erreicht werden kann. Bei der Montage kann somit unmittelbar "erfühlt" werden, ob der Kupplungskopf gemäß der vorgegebenen Orientierung montiert ist.

Um die Verbindung des Kopplungselements mit einem fluidischen Leitungsteil der fluidischen Leitung zu stabilisieren, ist gemäß einer Ausführungsform eine Verstärkungshülse für das fluidische Leitungsteil an dem Kopplungselement vorgesehen. Indem die Verstärkungshülse biegsam ist, werden Bewegungen des fluidischen Leitungsteils zumindest in einem gewissen Umfang zugelassen. Gleichzeitig wird der Bewegungsspielraum der fluidischen Leitungsteils gegenüber dem Kopplungselement jedoch begrenzt. Insbesondere wird durch die Verstärkungshülse ein Abknicken des fluidischen Leitungsteils im Bereich der Verbindung mit dem Kopplungselement verhindert. Vorzugsweise ist die Verstärkungshülse aus einem elastischen Material wie Gummi oder einem weichen Kunststoff hergestellt. Die Verstärkungshülse kann aber aus einem steifen Material hergestellt sein, wobei dann u. U. die Biegsamkeit durch die Formgebung der Verstärkungshülse erreicht wird. Beispielsweise kann die Verstärkungshülse mit Schlitzen versehen sein, die sich im Wesentlichen quer zu ihrer Längsachse über einen Teilumfang ihres Außenumfangs erstrecken, wobei die Schlitze durch schmale Stege voneinander getrennt sind.

Die Verstärkungshülse kann separat von dem Kopplungselement ausgebildet und beispielsweise durch eine stoffschlüssige Verbindung mit diesem verbunden sein. Die Verstärkungshülse und das Kopplungselement können dabei aus unterschiedlichen Materialien hergestellt sein. Beispielsweise kann das Kopplungselement aus einem steifen Material hergestellt sein, während die Verstärkungshülse aus einem elastischen Material hergestellt ist.

Gemäß einer vorteilhaften Ausgestaltung der Erfindung sind die Verstärkungshülse und das Kopplungselement jedoch als einstückig hergestelltes Kunststoffteil ausgebildet. Insbesondere kann durch die integrale Ausbildung der Verstärkungshülse mit dem Kopplungselement eine sichere Verbindung und somit ein wirksamer Knickschutz des fluidischen Leitungsteils realisiert werden. Beispielsweise können die Verstärkungshülse und das Kopplungselement in einem Spritzgussverfahren als einstückiges Kunststoffteil hergestellt werden. Konkret kann es sich bei dem Kunststoffteil um ein Teil aus einem Thermoplast, z. B. Polyamid, handeln. Möglich ist auch, dass das einstückige Kunststoffteil in einem Zwei- oder Mehrkomponenten-Spritzgussverfahren mit unterschiedlichen Materialien, u. U. auch unter Verwendung von so genannten Einlegern, hergestellt ist, bei welchem nacheinander das Einlegen in unterschiedliche Formen mit einem An- oder Umspritzen des zuvor hergestellten Formlings erfolgt.

Für die Verbindung des fluidischen Leitungsteils mit dem Kopplungselement und ggf. mit einer oder der Verstärkungshülse gibt es vielfältige Möglichkeiten. Gemäß einer Ausgestaltung der Erfindung handelt es sich bei der Verbindung um eine stoffschlüssige Verbindung. Die stoffschlüssige Verbindung des fluidischen Leitungsteils mit dem Kopplungselement und/oder der Verstärkungshülse kann beispielsweise durch Kleben oder Schweißen, insbesondere Reibschweißen oder Ultraschallschweißen hergestellt sein.

Gemäß einer anderen Ausführungsform der Erfindung ist das fluidische Leitungsteil formschlüssig mit dem Kopplungselement verbunden. Dabei kann es sich um eine dauerhafte oder eine lösbare Verbindung handeln. Insbesondere kann es sich bei der formschlüssigen Verbindung um eine Rast- oder Sperrverbindung handeln. Z. B. kann die Rast- oder Sperrverbindung zwischen einem mit dem Leitungsteil verbundenen Anschlussteil und dem Kopplungselement ausgebildet und so ausgestaltet sein, wie es aus der Druckschrift DE 10 2005 047 835 A1 bekannt ist.

Weiterhin besteht die Möglichkeit, dass das fluidische Leitungsteil kraftschlüssig mit dem Kopplungselement verbunden ist. Beispielsweise kann das fluidische Leitungsteil, ggf. über ein mit dem fluidischen Leitungsteil verbundenes Anschlussteil, mit dem Kopplungselement verschraubt werden. Die kraftschlüssige Verbindung kann jedoch auch als eine Klemmverbindung ausgestaltet sein. Beispielsweise kann das fluidische Leitungsteil in einer Ausnehmung des Kopplungselements für das fluidische Leitungsteil verklemmt oder verpresst sein.

Die Verbindung des Kopplungselements mit dem fluidischen Leitungsteil kann vor oder nach der Kopplung des Kopplungselements mit dem Kopplungskopf erfolgen. Gemäß einer besonderen Ausführungsform der Erfindung erfolgt die Verbindung des Kopplungselements mit dem fluidischen Leitungsteil gleichzeitig mit der Kopplung des Kopplungselements mit dem Gehäuse des Kupplungskopfes oder die Verbindung wird mit der Montage verstärkt oder erst endgültig fixiert. Dazu weist das Kopplungselement ein elastisch verformbares und/oder bewegbares Klemm- und/oder Schneidelement auf, das beim Fügen des Kopplungselements mit dem Gehäuse über eine Führungsfläche für das Klemm- und/oder Schneidelement, welche von einer einen oder den Anschluss begrenzenden Innenfläche des Gehäuses gebildet ist, derart geführt wird, dass das Klemm- und/oder Schneidelement in Richtung des fluidischen Leitungsteils verformt und/oder bewegt wird. Wenn das Kopplungselement ein elastisch verformbares und/oder bewegbares Klemmelement aufweist, kann so mit dem Fügen des Kopplungselements mit dem Gehäuse das fluidische Leitungsteil kraftschlüssig mit dem Kopplungselement verbunden werden.

Bei der Verwendung eines Schneidelements, das sich beim Fügen des Kopplungselements mit dem Gehäuse in Richtung des fluidischen Leitungsteils verformt und/oder bewegt, schneidet sich das Schneidelement mit der Bewegung und/oder Verformung zumindest teilweise in das Leitungsteil ein, womit zumindest auch eine formschlüssige Verbindung vorliegt. Konkret kann das Schneidelement als eine Art Schneidring ausgebildet sein. Das Schneidelement kann beim Fügen des Kopplungselements mit dem Gehäuse unmittelbar mit der Führungsfläche in Wechselwirkung treten. Es kann jedoch auch vorgesehen sein, dass das Kopplungselement beispielsweise in seinem in den Anschluss hineinragenden Endbereich Federarme aufweist, die mit der Führungsfläche wechselwirken und das Schneidelement beim Fügen des Kopplungselements mit dem Gehäuse in Richtung des fluidischen Leitungsteils beaufschlagen. Bei dem Schneidelement kann es sich um einen in Umfangsrichtung umlaufenden Schneidring handeln. Es können aber auch einzelne über den Umfang verteilte Schneidsegmente vorgesehen sein.

Eine abdichtende Verbindung des Gehäuses mit dem Kopplungselement der fluidischen Leitung kann durch den Einsatz mindestens eines beliebigen Dichtelements erreicht werden. Das Dichtelement kann dabei dichtend an dem Gehäuse und dem Kopplungselement anliegen. Weiterhin kann vorgesehen sein, dass sowohl ein Dichtelement zwischen dem Gehäuse und dem Kopplungselement als auch ein Dichtelement zwischen dem Kopplungselement und dem mit dem Kopplungselement verbundenen fluidischen Leitungsteil vorgesehen ist.

Eine dichtende Verbindung zwischen dem Gehäuse und dem Kopplungselement kann aber auch dadurch erreicht werden, dass im montierten Zustand nur ein Dichtelement dichtend zwischen dem Gehäuse und dem fluidischen Leitungsteil anliegt. Dies kann beispielsweise dadurch erreicht werden, dass sich das fluidische Leitungsteil durch das Kopplungselement hindurch erstreckt und mit einem aus dem Kopplungselement herausragenden Endbereich in eine in dem Gehäuse vorgesehene Ausnehmung für das fluidische Leitungsteil hineinragt, wobei das Dichtelement in der Ausnehmung für das fluidische Leitungsteil angeordnet ist und dichtend an dem Endbereich des fluidischen Leitungsteils und einer die Ausnehmung für das fluidische Leitungsteil begrenzenden Innenfläche des Gehäuses anliegt. Beispielsweise kann es sich bei dem Dichtelement um einen O-Ring handeln, der auf den in die Ausnehmung hineinragende Endbereich des fluidischen Leitungsteil aufgesteckt ist und in einem montierten Zustand dichtend an der Innenfläche der Ausnehmung für das fluidische Leitungsteil anliegt. Indem das fluidische Leitungsteil gemäß dieser Ausführungsform unmittelbar gegenüber dem Gehäuse abgedichtet ist, ist es nicht zwingend erforderlich, weitere Dichtelemente, z. B. zur abdichtenden Verbindung des Kopplungselements mit dem Gehäuse oder zur abdichtenden Verbindung des fluidischen Leitungsteils mit dem Kopplungselement, vorzusehen.

Üblicherweise ist an einem Zugfahrzeug oder einem Anhänger, an das oder an dem der Kupplungskopf befestigt werden soll, ein Tragelement für den Kupplungskopf vorgesehen. Der Kupplungskopf kann dabei z. B. über eine Schraubverbindung mit dem Tragelement verbunden und so an Zugfahrzeug oder den Anhänger montiert werden. Dazu können entsprechende Gewindebohrungen in dem Gehäuse des Kupplungskopfes vorgesehen sein. Gemäß einer Ausführungsform der Erfindung wird jedoch eine andere Art der Montage des erfindungsgemäßen Kupplungskopfes an ein Tragelement vorgeschlagen: Gemäß dieser Ausführungsform erfolgt die Montage über ein eine Montageausnehmung aufweisendes Tragelement, wobei sich das Gehäuse des Kupplungskopfes und/oder das Kopplungselement im montierten Zustand zumindest teilweise durch die Montageausnehmung erstrecken/erstreckt. Der Kupplungskopf ist dabei dadurch an dem Tragelement gehalten, das das Kopplungselement und das Gehäuse auf ihren einander gegenüberliegenden Seiten Anlageflächen aufweisen, die im montierten Zustand an einander gegenüberliegenden Seiten des Tragelements anliegen. Möglich ist auch, dass das Tragelement im montierten Zustand zwischen dem Kopplungselement und dem Gehäuse gefangen ist. Die Befestigung des Kupplungskopfes an dem Tragelement kann dabei spielbehaftet sein. Vorzugsweise aber ist die Montage des Kupplungskopfes an dem Tragelement im Wesentlichen spielfrei oder mit einer Vorspannung ausgebildet.

Dadurch, dass das Tragelement in dem montierten Zustand zwischen dem Kopplungselement und dem Gehäuse gefangen ist, wird unter Umständen noch keine Fixierung der Lage des Kupplungskopfes gegenüber dem Tragelement erreicht. Um lediglich ein Beispiel zu nennen, kann bei einer zylinderförmigen Montageausnehmung noch eine Verdrehung des Kupplungskopfes um die Zylinderachse erfolgen. Um einen solchen Freiheitsgrad der Drehung zu unterbinden, ist gemäß einer Ausführungsform der Erfindung ein formschlüssiges Befestigungsmittel vorgesehen, über welches der Kupplungskopf zumindest drehfest gegenüber einer Rotation um eine Achse parallel zur Fügerichtung des Gehäuses mit dem Kopplungselement an dem Tragelement montierbar ist. Eine Montage des Kupplungskopfes erfolgt dann, indem das Kopplungselement über die Rast- oder Sperrverbindung mit dem Gehäuse des Kupplungskopfes verbunden wird, wobei das Tragelement zwischen dem Gehäuse und dem Kopplungselement gefangen ist, während zusätzlich die Abstützung oder Sicherung durch Formschluss mittels des formschlüssigen Befestigungsmittels erfolgt. Durch das Zusammenwirken wird dann erreicht, dass die zuvor genannte Verdrehung unterbunden ist. Vorzugsweise werden dabei jedwede auf den Kupplungskopf wirkenden Querkräfte und Momente durch das Befestigungsmittel, das sich durch die Montageausnehmung erstreckende Gehäuse und/oder Kopplungselement und die an den einander gegenüberliegenden Seiten des Tragelements anliegenden Anlageflächen des Kopplungselements und des Gehäuses aufgenommen, womit der Kupplungskopf stabil und sicher an dem Tragelement befestigt ist.

Das formschlüssige Befestigungsmittel kann auf beliebige Weise mit dem Gehäuse oder dem Kopplungselement verbunden sein. Beispielsweise kann es sich um eine stoffschlüssige Verbindung handeln, die durch Schweißen oder Kleben hergestellt wird. Es sind jedoch auch andere Arten der Befestigung möglich. Für eine besonders hohe Stabilität der Verbindung ist das formschlüssige Befestigungsmittel einstückig mit dem Gehäuse oder dem Kopplungselement ausgebildet.

Für die konkrete Ausgestaltung des formschlüssigen Befestigungsmittels gibt es vielfältige Möglichkeiten. Beispielsweise kann das formschlüssige Befestigungsmittel ein Haltestift oder Haltevorsprung sein, über den sich der Kupplungskopf durch Formschluss an dem Tragelement abstützen kann. Eine andere Möglichkeit ist, dass das formschlüssige Befestigungsmittel eine Aussparung in dem Gehäuse oder dem Kopplungselement ist, wobei in die Aussparung ein entsprechender Haltestift des Tragelements eingreifen kann, womit eine formschlüssige Befestigung erfolgt.

Je nach Ausgestaltung der Montageausnehmung und des Kupplungskopfes kann eine Montage des Kupplungskopfes an dem Tragelement u. U. mit verschiedenen Orientierungen zueinander erfolgen. Ggf. ist es jedoch erwünscht, dass der Kupplungskopf nur mit einer vorgegeben Orientierung relativ zu dem Tragelement an diesem montiert werden kann. Wenn das Kopplungselement und das Gehäuse des Kupplungskopfes derart ausgebildet sind, dass die Verbindung des Kopplungselements mit dem Gehäuse nur mit einer bestimmten Orientierung des Kopplungselements relativ zu dem Gehäuse erfolgen kann, kann es für eine Montage mit einer vorgegebenen Orientierung des Kupplungskopfes relativ zu dem Tragelement bereits ausreichend sein, wenn entweder an dem Kopplungselement oder an dem Gehäuse ein Haltestift oder Haltevorsprung vorgesehen ist, der sich an dem Tragelement abstützt, z. B. in eine Ausnehmung in dem Abstützelement hineinragt. Soll der Kupplungskopf jedoch mit einer bestimmten Orientierung an dem Tragelement befestigt werden, wobei die Orientierung des Gehäuses relativ zu dem Kopplungselement noch nicht durch deren Kopplung über die Rast- oder Sperrverbindung vorgegeben ist, muss die Festlegung der Orientierung auf anderem Wege erreicht werden. Dazu kann beispielsweise vorgesehen sein, dass sowohl an dem Kopplungselement als auch an dem Gehäuse Haltestifte vorgesehen sind, wobei für jeden Haltestift eine Ausnehmung in dem Tragelement vorgesehen ist. Eine andere Möglichkeit ist, dass lediglich an dem Kopplungselement ein Haltestift vorgesehen ist, der sich im montierten Zustand durch eine Durchgangsausnehmung in dem Tragelement und in eine in dem Gehäuse vorgesehene Ausnehmung für den Haltestift hinein erstreckt. Umgekehrt kann auch lediglich an dem Gehäuse ein Haltestift vorgesehen sein, während das Kopplungselement die Ausnehmung für den Haltestift aufweist.

Weiterhin kann die gegenüber einer Rotation drehfeste Montage des Kupplungskopfes an dem Tragelement dadurch erreicht werden, dass ein Querschnitt der Montageausnehmung in dem Tragelement und ein Querschnitt des Anschlusses in dem Gehäuse und/oder des Kopplungselements in einer Projektion in Richtung der Fügerichtung des Kopplungselements mit dem Gehäuse hinsichtlich ihrer Form übereinstimmen und durch die Form der Querschnitte eine Orientierung des Kupplungskopfes relativ zu dem Tragelement vorgegeben ist. Konkret kann vorgesehen sein, dass die Montageausnehmung und der Anschluss und/oder das Kopplungselement keinen kreisförmigen, sondern einen unrunden (insbesondere einen ovalen, rechteckigen oder sternförmigen) Querschnitt o. ä. aufweisen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Dichtelement oder Bauelement die Rede ist, ist dies so zu verstehen, dass genau ein Dichtelement oder Bauelement, zwei Dichtelemente oder Bauelemente oder mehr Dichtelemente oder Bauelemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Teillängsschnitt durch eine erste Ausführungsform eines Kupplungskopfes, bei dem ein Kopplungselement einer fluidischen Leitung über eine Rast- oder Sperrverbindung mit einem Gehäuse des Kupplungskopfes gekoppelt ist.
- **Fig. 2**: zeigt einen Teillängsschnitt durch eine weitere Ausführungsform eines Kupplungskopfes, bei dem ein Kopplungselement einer fluidischen Leitung über eine Rast- oder Sperrverbindung mit einem Gehäuse des Kupplungskopfes gekoppelt ist.
- **Fig. 3**: zeigt ein Detail III des Kupplungskopfes gemäß Fig. 2.
- **Fig. 4**: zeigt einen Teillängsschnitt durch einen Kupplungskopf, der an einem Tragelement des Zugfahrzeugs oder Anhängers montiert ist.
- **Fig. 5 u. 6**: zeigen Teillängsschnitte durch eine weitere Ausführungsform eines Kupplungskopfes, bei denen eine Öffnung in einer Kammer in einem Gehäuse des Kupplungskopfes mit einem Verschlusselement verschlossen ist.
- **Fig. 7**: zeigt ein Detail eines Kupplungskopfes gemäß Fig. 6 bei Blickrichtung von unten in Fig. 6.
- **Fig. 8 u. 9**: zeigen Einzelansichten des Gehäuses und des Verschlusselements gemäß dem Detail in Fig. 7.
- **Fig. 10**: zeigt einen Teillängsschnitt durch eine weitere Ausführungsform eines Kupplungskopfes, bei dem ein Kopplungselement einer fluidischen Leitung über eine Rast- oder Sperrverbindung mit einem Gehäuse des Kupplungskopfes gekoppelt ist.
- **Fig. 11 u. 12**: zeigen jeweils einen Teillängsschnitt durch eine weitere Ausführungsform eines Kupplungskopfes, bei dem ein Kopplungselement einer fluidischen Leitung über eine Rast- oder Sperrverbindung mit einem Gehäuse des Kupplungskopfes koppelbar ist, wobei Fig. 11 den gekoppelten Zustand und Fig. 12 den ungekoppelten Zustand zeigt.

### FIGURENBESCHREIBUNG

Der erfindungsgemäße Kupplungskopf 1 kann für eine beliebige pneumatische Kupplung eingesetzt werden, insbesondere zur Verbindung einer Vorratsleitung oder einer Bremssteuerleitung eines Zugfahrzeugs mit einer Druckluftbremsanlage eines Anhängers. Durchaus möglich ist, dass zusätzlich zu den im Folgenden offenbarten Merkmalen weitere Bauelemente und technische Funktionen in den Kupplungskopf integriert sind, beispielsweise Filterelemente, wie sie aus DE 199 31 162 B4 oder DE 10 2011 002 129 A1 bekannt sind, Drosselelemente o. ä. Bei dem erfindungsgemäßen Kupplungskopf 1 kann es sich um den anhängerseitigen Kupplungskopf und/oder der zugfahrzeugseitigen Kupplungskopf handeln.

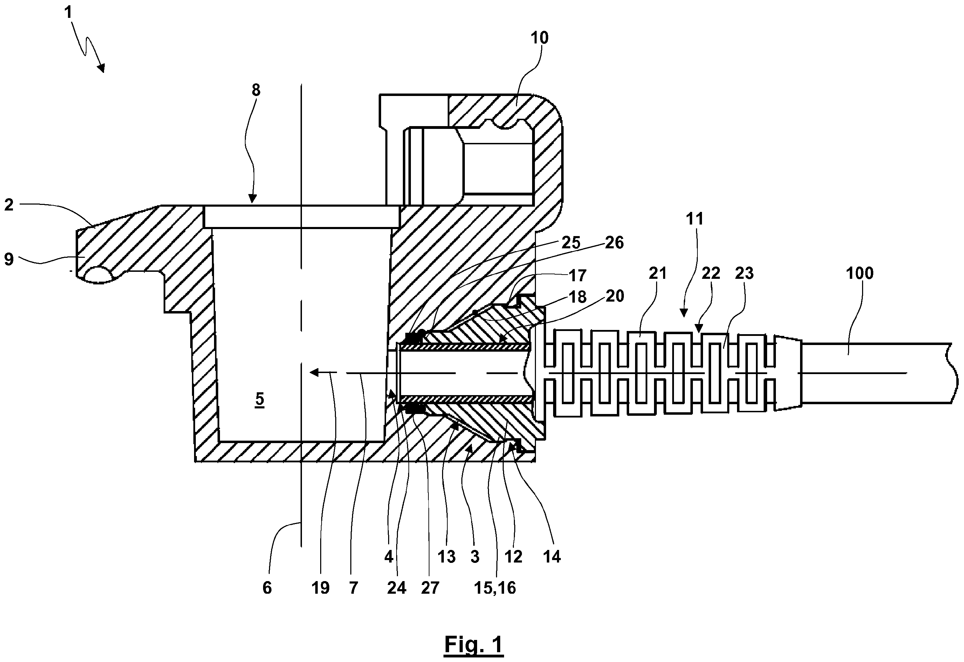

Der Kupplungskopf 1 gemäß **Fig. 1** besitzt ein Gehäuse 2, welches einen Anschlussbereich 3, einen geradlinigen Leitungsbereich 4 und eine Kammer 5 aufweist, welche eine Längsachse 6 besitzt, die quer zur Längssache 7 des Anschlussbereichs 3 und dem Leitungsbereich 4 orientiert ist. Der Leitungsbereich 4 mündet seitlich in die Kammer 5. Für das in Fig. 1 dargestellte Ausführungsbeispiel weist die Kammer 5 eine kegelstumpfförmige Geometrie auf und besitzt lediglich nach oben und in Richtung der Längsachse 6 eine Öffnung 8. Weiterhin weist das Gehäuse ein Verbindungsteil 9 sowie ein Gegenverbindungsteil 10 auf, über die der Kupplungskopf 1 mit einem in Fig. 1 nicht dargestellten Gegenkupplungskopf bajonettartig verbunden werden kann. Vorzugsweise ist das Gehäuse 2 als Gussteil ausgebildet, z. B. als Spritzgussteil aus einem Kunststoff wie Polyamid.

Im Anschlussbereich 3 des Gehäuses 2 ist eine fluidische Leitung 11, die mit einem endseitigen Kopplungselement 12 und einem fluidischen Leitungsteil 100 gebildet ist, über das Kopplungselement 12 an den Kupplungskopf 1 angeschlossen und über den Leitungsbereich 4 fluidisch mit der Kammer 5 verbunden. Das Kopplungselement 12 der fluidischen Leitung 11 ist in einer in dem Gehäuse 2 gebildeten, den Anschluss 13 für die fluidische Leitung 11 ausbildenden Anschlussausnehmung aufgenommen und über eine Rast- oder Sperrverbindung 14 mit dem Gehäuse 2 gekoppelt. Zur Ausbildung der Rast- oder Sperrverbindung 14 weist das Kopplungselement 12 bei der in Fig. 1 dargestellten Ausführungsform ein integral mit dem Kopplungselement 12 ausgebildetes Rast- oder Sperrelement 15 in Form einer Rast- oder Sperrnase 16 auf, die am Außenumfang des Kopplungselements 12 gebildet ist. Hierbei kann sich die Rast- oder Sperrnase 16 nur in einem Teilumfangsbereich erstrecken, wobei in diesem Fall auch mehrere Rast- oder Sperrnasen 16 in Umfangrichtung verteilt angeordnet sein können, oder die Rast- oder Sperrnase kann in Umfangrichtung umlaufend ausgebildet sein. Zur Ausbildung der Rast- oder Sperrverbindung 14 hintergreift das Rast- oder Sperrelement 16 einen Absatz 17, der von einer Innenfläche 18 des Gehäuses 2 ausgebildet ist, mit der der Anschluss 13 begrenzt ist. Wie in Fig. 1 gezeigt, sind die Kontaktflächen zwischen dem Rast- oder Sperrelement 16 und dem Absatz 17 nicht quer, aber geneigt zu einer Fügerichtung 19 des Kopplungselements 12 mit dem Gehäuse 2 orientiert. So kann erreicht werden, dass die Rast- oder Sperrverbindung 14 des Kopplungselements 12 mit dem Gehäuse 2 durch Aufbringung von Lösekräften gelöst werden kann, ohne dass es hierdurch zu einer Beschädigung oder Zerstörung des Rast- oder Sperrelements 15 und/oder des Absatzes 17 kommt. Für eine dauerhafte Verbindung, die nur unter Zerstörung des Rast- oder Sperrelements 15 oder des Absatzes 17 wieder gelöst werden kann, kann aber auch - anders als in Fig. 1 dargestellt - vorgesehen sein, dass die Anlageflächen quer zur Fügerichtung 19 orientiert sind. Weiterhin kann das Lösen der Rast- oder Sperrverbindung 14 dadurch erschwert werden, dass z. B. eine Erstreckung eines Abschnitts des Rast- oder Sperrelements 15, mit dem es den Absatz 17 hintergreift, in einer Richtung quer zur Fügerichtung 19 vergrößert ist.

Zur Verbindung des Kopplungselements 12 mit dem fluidischen Leitungsteil 100 weist das Kopplungselement 12 eine sich koaxial zu der Längsachse 7 erstreckende Durchgangsausnehmung 20 für das fluidische Leitungsteil 100 auf. Die Verbindung des fluidischen Leitungsteils 100 mit dem Kopplungselement 12 kann dabei z. B. durch Verkleben, Verschweißen, Anspritzen oder formschlüssiges Verbinden des fluidischen Leitungsteils 100 mit dem Kopplungselement 12 im Bereich der Durchgangsausnehmung 20 erreicht werden. Bei dem fluidischen Leitungsteil 100 kann es sich beispielsweise um ein Rohr oder einen Schlauch handeln.

Um das fluidische Leitungsteil 100 gegenüber einem Abknicken im Bereich im Bereich der Verbindung des Leitungsteils 100 mit dem Kopplungselement 12 zu schützen, ist eine Verstärkungshülse 21 vorgesehen, die bei dem in Fig. 1 dargestellten Ausführungsbeispiel einstückig mit dem Kopplungselement 12 ausgebildet ist. Um die Verstärkungshülse 21 biegsam auszugestalten, ist die Verstärkungshülse 21 mit Schlitzen 22 versehen, die sich in Umfangsrichtung zumindest über einen Teil des Umfangs der Verstärkungshülse 21 erstrecken, wobei benachbarte Schlitze 22 jeweils durch Stege 23 der Verstärkungshülse 21 voneinander getrennt sind.

Bei dem in Fig. 1 gezeigten Ausführungsbeispiel erstreckt sich das fluidische Leitungsteil 100 durch die Verstärkungshülse 21 und die Durchgangsausnehmung 20 in dem Kopplungselement 12 und ragt aus dem Kopplungselement 12 heraus in eine Ausnehmung 24 in dem Gehäuse 2 für die Aufnahme des Endbereichs des fluidischen Leitungsteils 100 hinein. Dabei ist in der Ausnehmung 24 ein Dichtelement 25 vorgesehen, das radial innenliegend dichtend an dem in die Ausnehmung 24 hineinragenden Endbereich des fluidischen Leitungsteils 100 anliegt und/oder radial außenliegend dichtend an der die Ausnehmung 24 begrenzenden Innenfläche 26 des Gehäuses 2 anliegt. So kann eine dichte Verbindung des fluidischen Leitungsteils 100 mit dem Gehäuse 2 erreicht werden. Zumindest mittelbar führt dies auch zu einer dichten Verbindung des Kopplungselements 12 mit dem Gehäuse 2.

Vorzugsweise liegt das Dichtelement 25 unter elastischer Vorspannung in Fügerichtung 19 an einer Stirnfläche 27 des Kopplungselements 12 an, so dass das Kopplungselement 12 im gekoppelten Zustand zumindest in Fügerichtung 19 gegenüber dem Gehäuse 2 lagefixiert ist. Durch die elastische Vorspannung kann alternativ oder kumulativ zu der zuvor erläuterten Dichtwirkung eine Abdichtung zwischen dem Gehäuse 2 und dem Kopplungselement 12 erfolgen. Durch eine Vorspannung des Dichtelements 25 kann auch ein etwaiges Spiel der Rast- oder Sperrverbindung 14 in Fügerichtung 19 reduziert oder beseitigt werden.

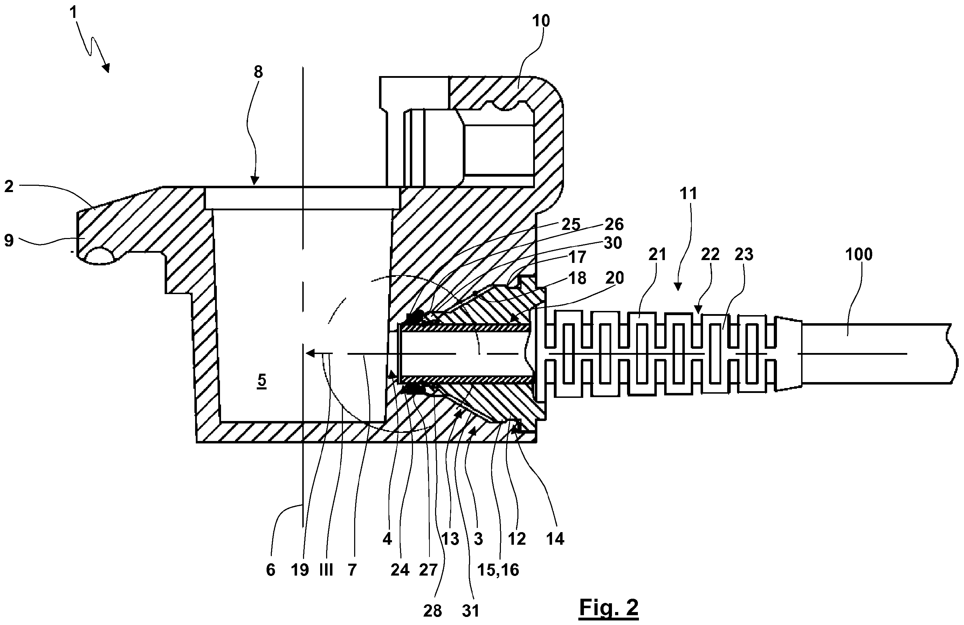

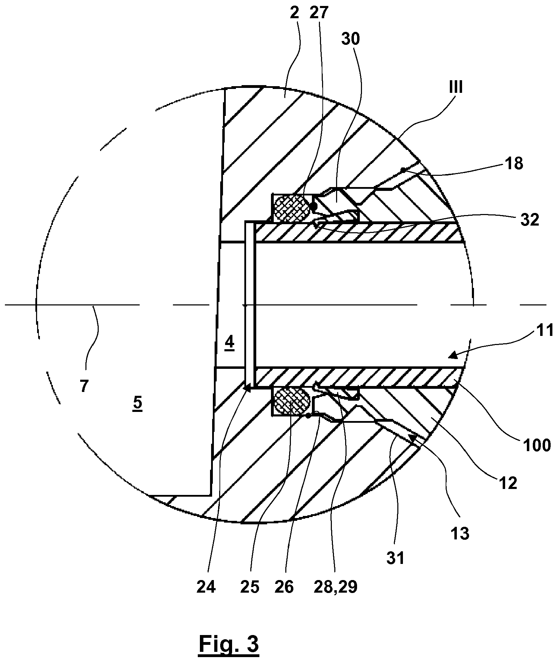

Die in Fig. 2 gezeigte Ausführungsform des Kupplungskopfes 1 entspricht grundsätzlich der in Fig. 1 gezeigten Ausführungsform, wobei jedoch die Verbindung des Kopplungselements 12 mit dem fluidischen Leitungsteil 100 anders ausgestaltet ist als bei dem in Fig. 1 gezeigten Ausführungsbeispiel: Bei dem in Fig. 2 gezeigten Ausführungsbeispiel wird die Verbindung des fluidischen Leitungsteils 100 mit dem Kopplungselement 12 zumindest nicht allein über eine stoffschlüssige Verbindung, z. B. durch Verkleben des fluidischen Leitungsteils 100 mit dem Kopplungselement 12 im Bereich der Durchgangsausnehmung 20, erreicht. Vielmehr erfolgt die Verbindung zumindest auch über eine kraftschlüssige und/oder formschlüssige Verbindung. Dazu ist an dem in den Anschluss 13 hineinragenden Ende des Kopplungselements 12 ein Klemm- und Schneidelement 28 vorgesehen, wie insbesondere aus dem in **Fig. 3** gezeigten Detail III ersichtlich ist. Das Klemm- und Schneidelement 28 weist einen Schneidring 29 auf, der zwischen dem fluidischen Leitungsteil 100 und endseitig an dem Kopplungselement 12 angeformten Federarmen 30 angeordnet ist. Beim Fügen des Kopplungselements 12 mit dem Gehäuse 2 können für einen ersten Fügebewegungsbereich die Federarme 12 ohne Kontakt mit der Innenfläche 18 gegenüber dem Gehäuse 2 bewegt werden. Mit Annäherung an die in Fig. 3 dargestellten Fügestellung in einem zweiten Fügebewegungsbereich treten die Federarme 30 mit der den Anschluss 13 begrenzenden Innenfläche 18 des Gehäuses 2 derart in Wechselwirkung, dass die Federarme 30 in Richtung des fluidischen Leitungsteils 100 beaufschlagt werden. Dazu weist der Anschluss 13 einen Abschnitt auf, in dem der Anschluss 13 von einer sich in Fügerichtung 19 verjüngenden Fase 31 begrenzt ist, wobei an die Fase 31 ein Abschnitt mit einem reduzierten Durchmesser anschließt. Die Federarme 30 treten zunächst mit der Fase 31 in Wechselwirkung und werden mit der Bewegung in Fügerichtung 19 zunehmend radial nach innen in Richtung des fluidischen Leitungsteils 100 bewegt. Dabei beaufschlagen die Federarme 30 den Schneidring 29 derart, dass dieser ebenfalls in radialer Richtung in Richtung der Mantelfläche des fluidischen Leitungsteils 100 bewegt wird. Mit der Bewegung des Schneidrings 29 wird das fluidische Leitungsteil 100 einerseits von dem Schneidring 29 und den Federarmen 30 eingeklemmt, d. h. es wird eine kraftschlüssige Verbindung erreicht. Andererseits schneidet sich der Schneidring 29 mit seiner Schneidkante 32 in das fluidische Leitungsteil 100 ein, womit auch eine formschlüssige Verbindung erreicht wird. Der Schneidring 29 kann eine in Umfangrichtung umlaufende Schneidkante 32 oder mehrere über den Umfang verteilte Schneidkanten 32 besitzen. Möglich ist auch, dass mehrere über den Umfang verteilte diskrete Schneidelemente verwendet werden.

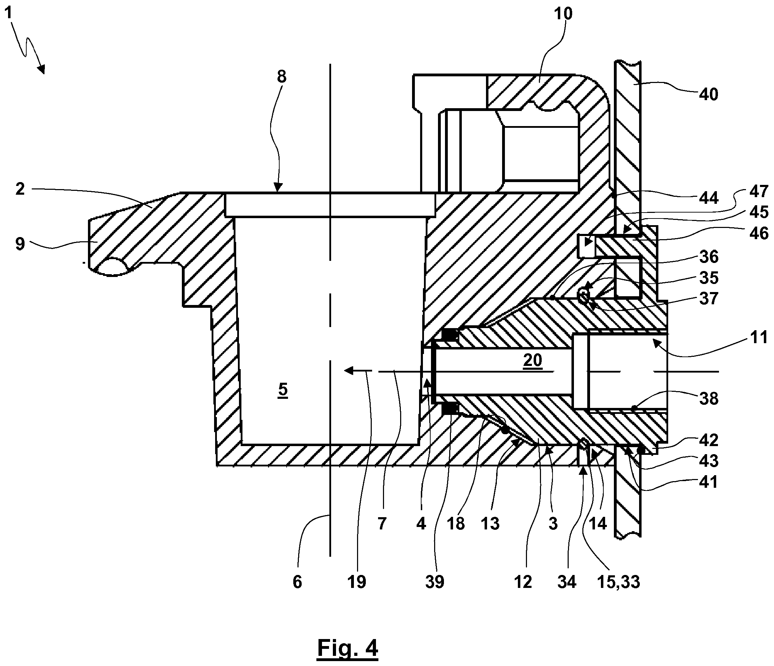

Bei der in **Fig. 4** gezeigten Ausführungsform des Kupplungskopfes 1 ist die Rast- oder Sperrverbindung 14 des Kopplungselements 12 mit dem Gehäuse 2 nicht wie in Fig. 1 und 2 mit einem Rast- oder Sperrelement 15 und einem Absatz 17 ausgebildet, die integral mit dem Kopplungselement 12 und dem Gehäuse 2 ausgebildet sind. Vielmehr ist das Rast- oder Sperrelement 15 bei dem in Fig. 4 gezeigten Ausführungsbeispiel ein Sicherungsring 33, der durch seitliche Öffnung 34 des Gehäuses 2 in eine in Umfangsrichtung um die Längsachse 7 verlaufende Sicherungsnut 35 des Gehäuses 2 eingesetzt ist. Zur Kopplung des Kopplungselements 12 mit dem Gehäuse 2 wird das Kopplungselement 12 in Fügerichtung 19 in den Anschluss 13 eingesteckt. Beim Fügen des Kopplungselements 12 mit dem Gehäuse 2 tritt der bereits in das Gehäuse 2 eingesetzte Sicherungsring 33 mit einer konischen Außenfläche 36 des Kopplungselements 12 derart in Wechselwirkung, dass der Sicherungsring 33 aufgeweitet wird und beim weiteren Fügen schließlich in eine am Außenumfang des Kopplungselements 12 gebildete, die Sicherungsnut 35 bildende Vertiefung 37 einschnappt, womit die Rast- oder Sperrverbindung 14 hergestellt ist. Bei dem Sicherungsring 33 kann es sich beispielsweise um einen Gummiring oder um einen geschlitzten Ring aus Metall oder Kunststoff handeln.

Weiterhin unterscheidet sich die in Fig. 4 dargestellte Ausführungsform von der in den Fig. 1 und 2 dargestellten Ausführungsformen in der Ausgestaltung der Verbindung des fluidischen Leitungsteils 100 mit dem Kopplungselement 12: Bei der in Fig. 4 dargestellten Ausführungsform ist das Kopplungselement 12 in dem der Kammer 5 abgewandten Endbereich mit einem Innengewinde 38 ausgestattet. In das Innengewinde 38 kann beispielsweise ein in Fig. 4 nicht dargestelltes Anschlussteil, das mit einem nicht dargestellten fluidischen Leitungsteil verbunden ist und an seinem Außenumfang mit einem dem Innengewinde entsprechenden Außengewinde ausgestattet ist, eingeschraubt werden, womit die fluidische Leitung über eine Schraubverbindung mit dem Kopplungselement 12 verbunden ist.

Zur Abdichtung des Kopplungselements 12 gegenüber dem Gehäuse 2 ist gemäß Fig. 4 in dem Anschluss 13 ein Dichtelement 39 angeordnet, das radial zwischen der Außenfläche 36 des Kopplungselements 12 und der den Anschluss 13 begrenzenden Innenfläche 18 verspannt ist. Eine Abdichtung des fluidischen Leitungsteils gegenüber dem Kopplungselement 12 kann über ein in Fig. 4 nicht dargestelltes Dichtelement oder eine im Bereich der Gewinde angeordnete Dichtmasse erfolgen.

Der in Fig. 4 gezeigte Kupplungskopf 1 ist derart ausgebildet, dass er auf besonders einfache Weise an einem Tragelement 40 eines Zugfahrzeugs oder eines Anhängers montiert werden kann. In dem in Fig. 4 gezeigten montierten Zustand erstreckt sich das Kopplungselement 12 mit seinem in Richtung des Gehäuses 2 weisenden Ende durch eine Montageausnehmung 41 in dem Tragelement 40. Das Kopplungselement 12 liegt mit einer von einem endseitig angeformten Flansch 42 ausgebildeten Anlagefläche 43 auf der dem Gehäuse 2 gegenüberliegenden Seite des Tragelements 40 an dem Tragelement 40 an. Auf der anderen Seite des Tragelements 40 liegt das Gehäuse 2 mit einer Anlagefläche 44 an dem Tragelement 40 an. Anders ausgedrückt ist das Tragelement 40 zwischen dem Kopplungselement 12 und dem Gehäuse 2 gefangen, womit der Kupplungskopf 1 an dem Tragelement 40 gehalten ist.

Um die Lage des Kupplungskopfes 1 gegenüber dem Tragelement 40 insbesondere auch gegenüber einer Drehung um die Längsachse 7 zu fixieren, ist bei dem in Fig. 4 gezeigten Ausführungsbeispiel eine Durchgangsausnehmung 45 in dem Tragelement 40 vorgesehen, durch die sich im montierten Zustand des Kupplungskopfes 1 ein an dem Flansch 42 angeformter Haltevorsprung 46 erstreckt. Möglich ist, dass der Haltevorsprung 46 darüber hinaus in eine in dem Gehäuse 2 vorgesehene Vertiefung 47 hineinragt, womit die Kopplung des Kopplungselements 12 mit dem Gehäuse 2 einerseits und die Montage des Kupplungskopfes 1 an dem Tragelement 40 andererseits gegenüber einer Drehung um die Längsachse 7 gesichert ist. Möglich ist aber auch, dass abweichend zu den zuvor erläuterten Maßnahmen eine Verdrehsicherung des Kopplungselements 12 gegenüber dem Tragelement 40 durch korrespondierende unrund ausgebildete Querschnitte einerseits der Außenfläche des Kopplungselements 12 und andererseits der Montageausnehmung 41 gewährleistet ist.

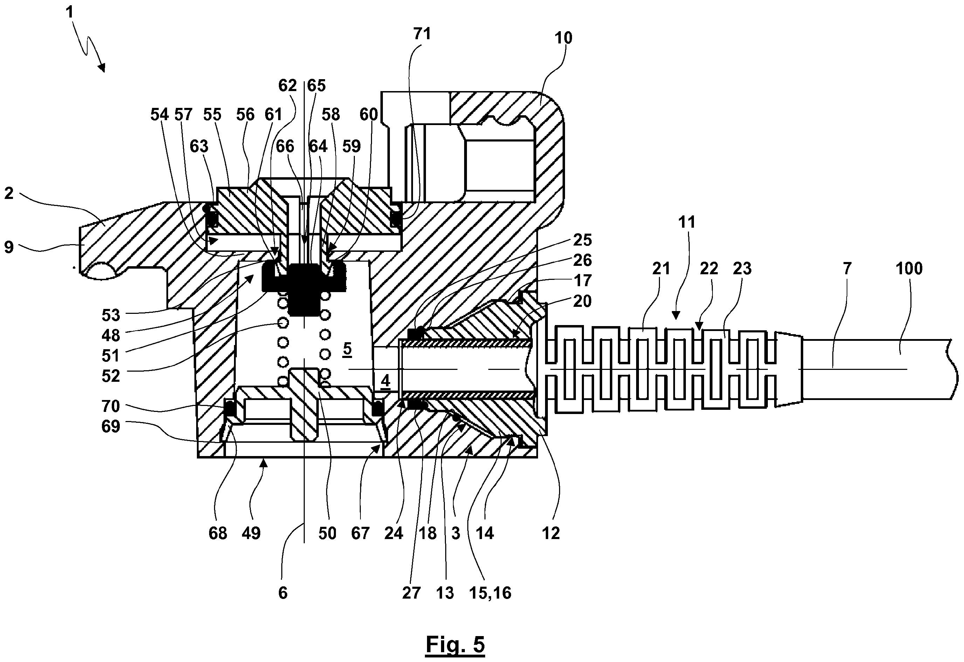

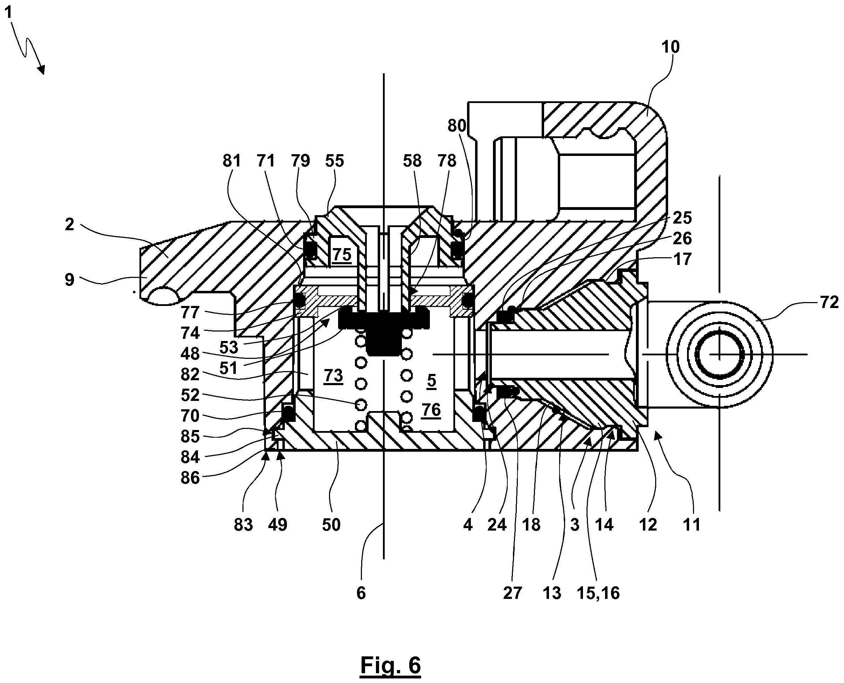

**Fig. 5** **und** **6** betreffen unterschiedliche Ausführungsformen eines Kupplungskopfes 1, bei denen der Kupplungskopf 1 mit einem Ventil 48 ausgestattet ist, das durch Kupplung des Kupplungskopfes 1 mit einem nicht dargestellten Gegenkupplungskopf von einer geschlossenen Stellung in eine geöffnete Stellung überführt wird. Weiterhin unterscheiden sich die in Fig. 5 und 6 gezeigten Ausführungsformen von der in Fig. 1 gezeigten Ausführungsform darin, dass die Kammer 5 im Bereich ihres Bodens nicht von einer Innenfläche des Gehäuses 2 begrenzt ist. Vielmehr weist die Kammer gemäß den in Fig. 5 und 6 gezeigten Ausführungsformen im Bereich ihres Bodens eine Öffnung 49 auf, die durch ein Verschlusselement 50 verschlossen ist.

Bei dem in Fig. 5 gezeigten Ausführungsbeispiel ist das Ventil 48 mit einem Ventilelement 51 ausgebildet, das sich über eine Feder 52 an dem Verschlusselement 50 abstützt und durch die von der Feder 52 auf das Ventilelement 51 ausgeübte Federkraft in Richtung seines Ventilsitzes 53 beaufschlagt ist. Der Ventilsitz 53 ist dabei von einer Wandung 54 des Gehäuses 2 ausgebildet, die die Kammer 5 auf der in Richtung der Längsachse 6 auf der dem Verschlusselement 50 abgewandten Seite begrenzt.

Um das Ventilelement 51 von seinem Ventilsitz 53 heben und somit das Ventil 48 in seine geöffnete Stellung überführen zu können, ist ein Betätigungselement 55 vorgesehen, mit dessen Betätigung das Ventilelement 51 entgegen der von der Feder 52 ausgeübten Federkraft von seinem Ventilsitz 53 gehoben werden kann. Ein Grundkörper 56 des Betätigungselements 55 ist in einer oberhalb der Wandung 54 angeordneten Ausnehmung 57 in dem Gehäuse 2 angeordnet. An den Grundkörper 56 ist ein hülsenartiger Fortsatz 58 angeformt, der sich durch eine Ausnehmung 59 in der Wandung 54 erstreckt und in die Kammer 5 hineinragt. Dabei ist endseitig eine vorzugsweise umlaufende Rast- oder Sperrnase 60 an den Fortsatz 58 angeformt, die einen von der Wandung 54 ausgebildeten Absatz 61 hintergreift. Die Rast- oder Sperrnase 60 und der Absatz 61 bilden eine Rast- oder Sperrverbindung 62 aus, über die das Betätigungselement 55 in Richtung der Längsachse 6 mit dem Gehäuse 2 gekoppelt ist. Indem eine Längserstreckung des Fortsatzes 58 in Richtung der Längsachse 6 größer ist als eine Längserstreckung der Wandung 54, ist die Rast- oder Sperrverbindung 62 mit einem Spiel behaftet. Insbesondere ist so gewährleistet, dass das Betätigungselement 55 in begrenztem Umfang in Richtung der Längsachse 6 gegenüber dem Gehäuse 2 bewegt werden kann. Vorzugsweise ist dabei eine Bewegung des Betätigungselements 55 geführt. Beispielsweise kann eine Bewegung des Betätigungselements 55 über eine Innenfläche 63 des Gehäuses 2 geführt sein, die die Ausnehmung 57 für das Betätigungselement 55 begrenzt.

In Bezug auf die Kopplung des Betätigungselements 55 mit dem Ventilelement 51 kann es ausreichend sein, wenn das Betätigungselement 55 einseitig wirkend mit dem Ventilelement 51 gekoppelt ist. Für ein besonders sicheres Öffnen und Schließen des Ventils 48 kann es jedoch vorteilhaft sein, wenn das Betätigungselement 55 beidseitig wirkend mit dem Ventilelement 51 gekoppelt ist. Dazu weist das Ventilelement 51 bei dem in Fig. 5 gezeigten Ausführungsbeispiel einen sich in Längsrichtung 6 erstreckenden Verbindungsabschnitt 64 auf, der in einer Ausnehmung 65 in dem Fortsatz 58 unter Ausbildung einer kraft-, form- und/oder stoffschlüssigen Verbindung aufgenommen ist. Möglich ist, dass das Ventilelement 51 wie dargestellt einen Fortsatz ausbildet, der sich in das Innere des Fortsatzes 58 des Betätigungselements 55 erstreckt und der montierten Stellung eine Einfederung der Rast- oder Sperrnase 60 und damit die Rast- oder Sperrverbindung sperrt. Anders als in Fig. 5 dargestellt kann eine zweiseitig wirkende Kopplung mit dem Ventilelement 51 auch dadurch erreicht werden, dass das Betätigungselement 55 an dem in die Kammer 5 hineinragenden Ende des Fortsatzes 58 über eine Rast- oder Sperrverbindungen mit dem Ventilelement 51 verbunden ist, wodurch das Betätigungselement 55 in der Kammer 5 verankert ist.

Wenn das Ventil 48 durch Betätigung des Betätigungselements 55 in seine geöffnete Stellung überführt wird, kann Druckluft von der fluidischen Leitung 11 durch den Leitungsbereich 4, die Kammer 5 und eine in Fig. 5 nicht dargestellte seitliche Öffnung in dem Fortsatz 58 in die Ausnehmung 65 strömen. Von dort gelangt die Druckluft über einen Leitungsbereich 66 in dem Betätigungselement 55 zu dem Gegenkupplungskopf. Die Druckluft kann auch in umgekehrter Richtung von dem Gegenkupplungskopf zu der fluidischen Leitung 11 strömen (sofern nicht in einem der Kupplungsköpfe oder den zugeordneten Leitungen ein Rückschlagventil angeordnet ist).

Die Montage des Ventilelements 51 und der Feder 52 kann bei dem in Fig. 5 gezeigten Ausführungsbeispiel über die Öffnung 49 in der Kammer 5 erfolgen. Dazu werden das Ventilelement 51 und die Feder 52 durch die Öffnung 49 von unten in die Kammer 5 eingesetzt, wenn diese noch nicht mit dem Verschlusselement 50 verschlossen ist. Dann wird die Öffnung 49 unter Vorspannung der Feder 52 mit dem Verschlusselement 50 verschlossen. Dabei wird durch die Vorspannung der Feder 52 erreicht, dass das Ventilelement 51 in Richtung seines Ventilsitzes 53 beaufschlagt ist. Nach der Montage des Ventilelements 51, der Feder 52 und des Verschlusselements 50 kann das Betätigungselement 55 von oben durch die Ausnehmung 59 gesteckt und mit dem Gehäuse 2 und/oder dem Ventilelement 51 verbunden werden. Ebenfalls möglich ist eine Montage in umgekehrter Reihenfolge. Die Montage des Betätigungselements 55 kann aber auch erfolgen, bevor die Öffnung 49 mit dem Verschlusselement 50 verschlossen ist, wodurch es u. U. einfacher ist, das Betätigungselement 55 mit dem Ventilelement 51 zu verbinden.

Die Montage des Verschlusselements 50 mit dem Gehäuse 2 erfolgt über eine Rast- oder Sperrverbindung 67. Bei dem in Fig. 5 gezeigten Ausführungsbeispiel weist dazu das Verschlusselement 50 ein integral mit dem Verschlusselement 50 ausgebildetes Rast- oder Sperrelement 68 auf, welches sich entgegen der Montagerichtung erstreckt und radial nach innen elastisch verformbar ist. Zur Ausbildung der Rast- oder Sperrverbindung 67 hintergreift das Rast- oder Sperrelement 68 einen integral mit dem Gehäuse 2 ausgebildeten Absatz 69. (Umgekehrt kann für eine nicht dargestellte Ausführungsform aber auch das Rast- oder Sperrelement integral mit dem Gehäuse 2 ausgebildet sein, während der Absatz integral mit dem Verschlusselement 50 ausgebildet ist.)

Um die Öffnung 49 der Kammer 5 abdichtend zu verschließen, ist vorzugsweise ein Dichtelement 70 vorgesehen, das dichtend zwischen dem Verschlusselement 50 und dem Gehäuse 2 anliegt. Dabei kann das Dichtelement 70 unter elastischer Vorspannung in Richtung der Längsachse 6 an einem Absatz des Verschlusselements 50 anliegen, so dass das ein etwaiges Spiel der Rast- oder Sperrverbindung 67 reduziert oder beseitigt ist.

Weiterhin kann auch ein Dichtelement 71 zur abdichtenden Verbindung des Betätigungselements 55 mit dem Gehäuse 2 vorgesehen sein.

Die in **Fig. 6** gezeigte Ausführungsform unterscheidet sich von der in Fig. 5 gezeigten Ausführungsform zum einem darin, dass das Kopplungselement 12 einen abgewinkelten Abschnitt 72 aufweist, über den das fluidische Leitungsteil 100 mit dem Kopplungselement 12 verbunden werden kann.

Zum anderen ist bei der in Fig. 6 gezeigten Ausführungsform nicht vorgesehen, dass das Betätigungselement 55 einerseits und das Ventilelement 51, die Feder 52 und das Verschlusselement 50 anderseits von verschiedenen Seiten der Wandung 54 mit dem Gehäuse 2 montiert werden. Vielmehr weist das Gehäuse 2 bei dem in Fig. 6 gezeigten Ausführungsbeispiel eine abgestufte Durchgangsausnehmung 73 auf, die durch ein in der Durchgangsausnehmung 73 angeordnetes Trennelement 74 in einen Bereich 75 für das Betätigungselement 55 und in einen die Kammer 5 ausbildenden Bereich 76 unterteilt ist. Das Trennelement 74 übernimmt hier somit zumindest teilweise die Funktion der Wandung 54. Die Montage der in der Durchgangsausnehmung 73 angeordneten Teile, d. h. des Betätigungselements 55, des Trennelements 74, des Ventilelements 51, der Feder 52 und des Verschlusselements 50 sowie die Montage von etwaigen Dichtelementen 70, 71, 77 kann dabei von einer Seite, nämlich durch die Öffnung 49 der Kammer 5 erfolgen.

In dem in Fig. 6 gezeigten montierten Zustand erstreckt sich das Betätigungselement 55 mit seinem hülsenartigen Fortsatz 58 durch eine Ausnehmung 78 in dem Trennelement 74 in die Kammer 5 und stützt sich in Betätigungsrichtung über das Ventilelement 51 und die Feder 52 an dem Verschlusselement 50 ab. Dabei wird das Ventilelement 51 durch die von der Feder 52 auf das Ventilelement 51 ausgeübte Federkraft in Richtung in seines von dem Trennelement 74 ausgebildeten Ventilsitzes 53 beaufschlagt. Gleichzeitig wird das Betätigungselement 55 aufgrund der von der Feder 52 auf das Ventilelement 51 ausgeübten Federkraft in Richtung seiner unbetätigten Stellung beaufschlagt, in der das Betätigungselement 55 mit einem Bund 79 an einem von dem Gehäuse 2 gebildeten Anschlag 80 anliegt. Das Trennelement 74 stützt sich einerseits an einem Anschlag 81 des Gehäuses 2 und andererseits über Abstandselemente 82 an dem Verschlusselement 50 ab und ist so in seiner Lage fixiert.

Weiterhin unterscheidet sich das in Fig. 6 gezeigte Ausführungsbeispiel von der in Fig. 5 gezeigten Ausführungsform darin, dass das Verschlusselement 50 über eine Bajonettverbindung 83 mit dem Gehäuse 2 verbunden ist, wobei die Bajonettverbindung 83 über eine Rast- oder Sperrverbindung gegenüber einer Drehung zum Lösen der Bajonettverbindung 83 gesichert ist. Zum Herstellen der Bajonettverbindung 83 wird das Verschlusselement 50 in die Öffnung 49 mit einer Fügebewegung entlang der Längsachse 6 eingesetzt. Durch Drehen des Verschlusselements 50 um die Längsachse 6 greift ein am Außenumfang des Verschlusselements 50 und sich radial nach außen erstreckender Bund 84 in Ausnehmungen 85 in einem sich radial nach innen erstreckenden Gegenbund 86 des Gehäuses 2 ein, womit das Verschlusselement 50 gegenüber einer Bewegung in Richtung der Längsachse 6 an dem Gehäuse 2 gesichert ist.

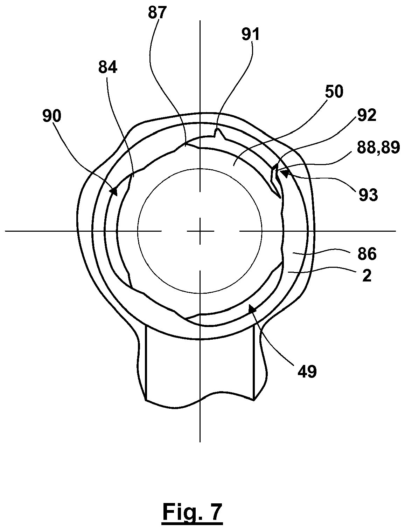

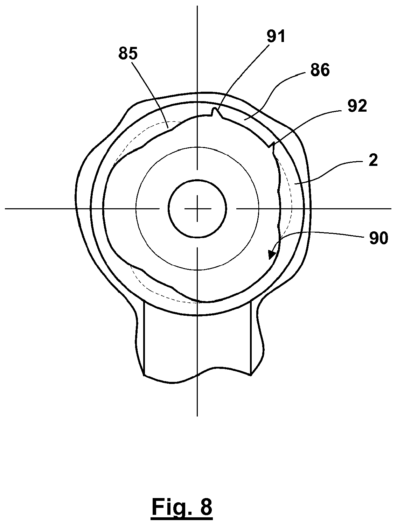

Die konkrete Ausgestaltung der Bajonettverbindung 83 und der Rast- oder Sperrverbindung zur Sicherung der Bajonettverbindung 83 gegenüber einer Drehung zum Lösen der Bajonettverbindung 83 wird anhand der **Fig. 7 bis 9** erläutert, die ein Detail des Kupplungskopfes 1 gemäß Fig. 6 bei Blickrichtung von unten zeigen.

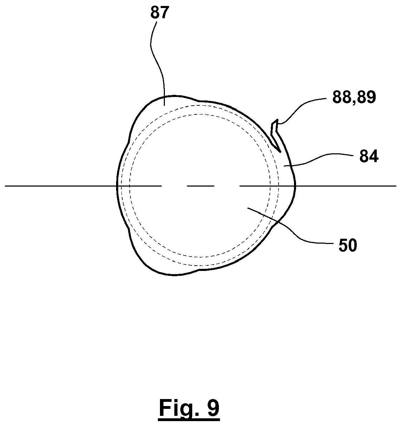

Wie in Fig. 9 gezeigt, ist die Außenkontur des Bunds 84 des Verschlusselements 50 im Wesentlichen kreisförmig mit drei konvexen Wölbungen 87, die in Umfangsrichtung um jeweils 120° zueinander versetzt angeordnet sind. Dabei ist an einer der Wölbungen 87 ein Fortsatz 88 vorgesehen, mit dem ein radial elastisches Rast- oder Sperrelement 89 gebildet ist.

Eine Innenkontur des Gegenbunds 86 des Gehäuses 2 ist im Wesentlichen komplementär zu der Außenkontur des Bunds 84 ausgebildet. Insbesondere weist der Gegenbund 86 eine Innenkontur mit einer kreisförmigen Grundform mit drei in Umfangsrichtung um 120° zueinander versetzt angeordneten konkaven Wölbungen 90 auf. Weiterhin sind in dem Gehäuse 2 die mit gestrichelten Linien angedeuteten Ausnehmungen 85 vorgesehen, die eine Art Tasche bilden, in welche die Wölbungen 87 eingeschwenkt werden, wenn das Verschlusselement 50 zur Herstellung der Bajonettverbindung 83 um die Längsachse 6 gedreht wird. Dabei ist durch die Form der Ausnehmungen 85 ein Anschlag ausgebildet, durch den eine Drehung des Verschlusselements 50 gegenüber dem Gehäuse 2 begrenzt ist. Insbesondere kann bei der Montage eine haptische Rückmeldung erfolgen, wenn das Verschlusselement 50 bereits weit genug gedreht ist für eine sichere Verbindung des Verschlusselements 50 mit dem Gehäuse 2. Weiterhin sind in dem Gegenbund 86 zwei Vertiefungen 91, 92 vorgesehen, die in etwa komplementär zu dem sich radial nach außen erstreckenden Endbereich des Rast- oder Sperrelements 89 ausgebildet sind.

Zum Herstellen der Bajonettverbindung 83 wird das Verschlusselement 50 so relativ zu dem Gehäuse 2 ausgerichtet, dass das Rast- oder Sperrelement 89 in einer Projektion in Fügerichtung des Verschlusselements 50 mit dem Gehäuse 2 mit der Vertiefung 91 überlappt und die Wölbungen 87 im Bereich der Wölbungen 90 angeordnet sind. Das Verschlusselement 50 wird dann so weit in die Öffnung 49 hineingeschoben, dass der Bund 85 in Richtung der Längsachse 6 in Höhe der Ausnehmungen 85 liegt. Dann wird das Verschlusselement 50 um die Längsachse 6 gegenüber dem Gehäuse 2 gedreht. Beim Drehen des Verschlusselements 50 werden die Wölbungen 87 in die Ausnehmungen 85 hineingeschwenkt. Gleichzeitig wird das Rast- oder Sperrelement 89 nach radial innen verformt, bis dieses aus der Vertiefung 91 austreten kann. Mit dem weiteren Drehen des Verschlusselements 50 kommt das Rast- oder Sperrelement 89 schließlich in den Bereich der Vertiefung 92 und schnappt in die Vertiefung 92 ein unter Ausbildung einer Rast- oder Sperrverbindung 93, die die Bajonettverbindung 83 gegenüber einer Drehung zum Lösen der Bajonettverbindung 83 sichert. In dieser Rast- oder Sperrstellung liegt zumindest eine Wölbung 87 an einem von einer Ausnehmung 85 gebildeten Anschlag an.

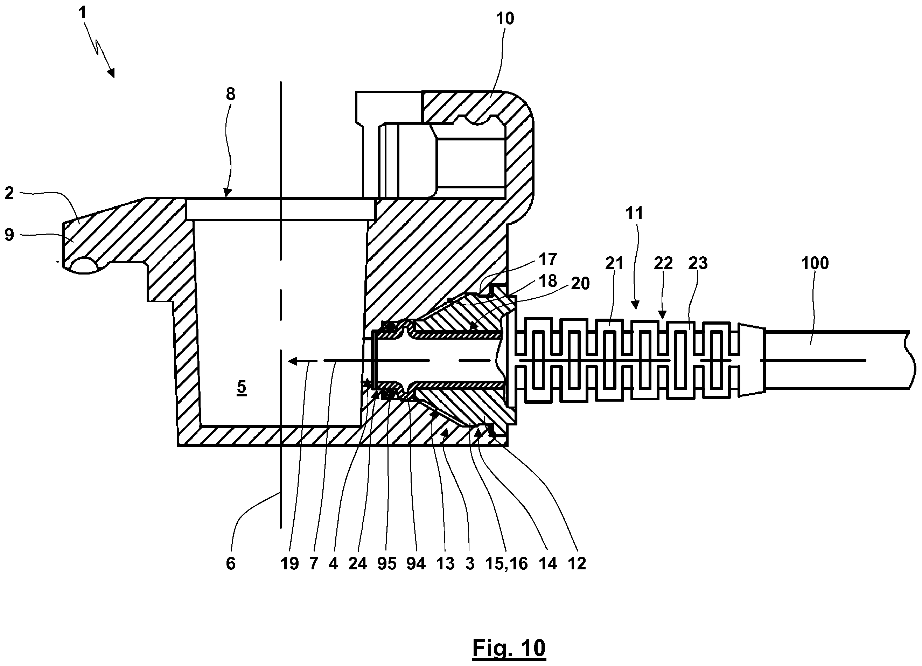

Die in **Fig. 10** gezeigte Ausführungsform des Kupplungskopfes 1 entspricht grundsätzlich der in Fig. 1 gezeigten Ausführungsform, wobei jedoch die Verbindung des Kopplungselements 12 mit dem fluidischen Leitungsteil 100 anders ausgestaltet ist als bei dem in Fig. 1 gezeigten Ausführungsbeispiel: Bei dem in Fig. 10 gezeigten Ausführungsbeispiel wird die Verbindung des fluidischen Leitungsteils 100 mit dem Kopplungselement 12 zumindest nicht allein über eine stoffschlüssige Verbindung, z. B. durch Verkleben des fluidischen Leitungsteils 100 mit dem Kopplungselement 12 im Bereich der Durchgangsausnehmung 20, erreicht. Vielmehr erfolgt die Verbindung zumindest auch über eine formschlüssige Verbindung. Konkret erfolgt die Verbindung über eine plastische Aufweitung des Leitungsteils 100 in dem in die Ausnehmung 24 hineinragenden Endbereich des Leitungsteils 100. Beispielsweise kann die plastische Verformung durch Heißverformung und (bspw. mechanische oder innendruckbeaufschlagte) Aufweitung des Leitungsteils 100 unter Ausbildung eines Wulsts 94 erfolgen. Der Wulst 94 kann dabei lediglich zur Verbindung des Leitungsteils 100 mit dem Kopplungselement 12 dienen. Die Wulst 94 kann jedoch auch eine abdichtende Funktion haben. Wie in Fig. 10 dargestellt, kann zur Abdichtung jedoch auch ein Dichtelement 95 zur Abdichtung der fluidischen Leitung 11 gegenüber dem Gehäuse 2 vorgesehen sein. Möglich ist auch, dass der Wulst 94 stirnseitig an dem Kopplungselement 12 anliegt und ein Herausziehen des Leitungsteils 100 sichert (vgl. Fig. 10). Ebenfalls möglich ist, dass das Kopplungselement 12 eine Innennut aufweist, in welche formschlüssig der Wulst 12 eingreift. Während hier ein in Umfangsrichtung umlaufender Wulst 12 dargestellt ist, ist ebenfalls möglich, dass sich der Wulst 12 oder auch eine Auswölbung nur über mindestens einen Teilumfangsbereich erstreckt.

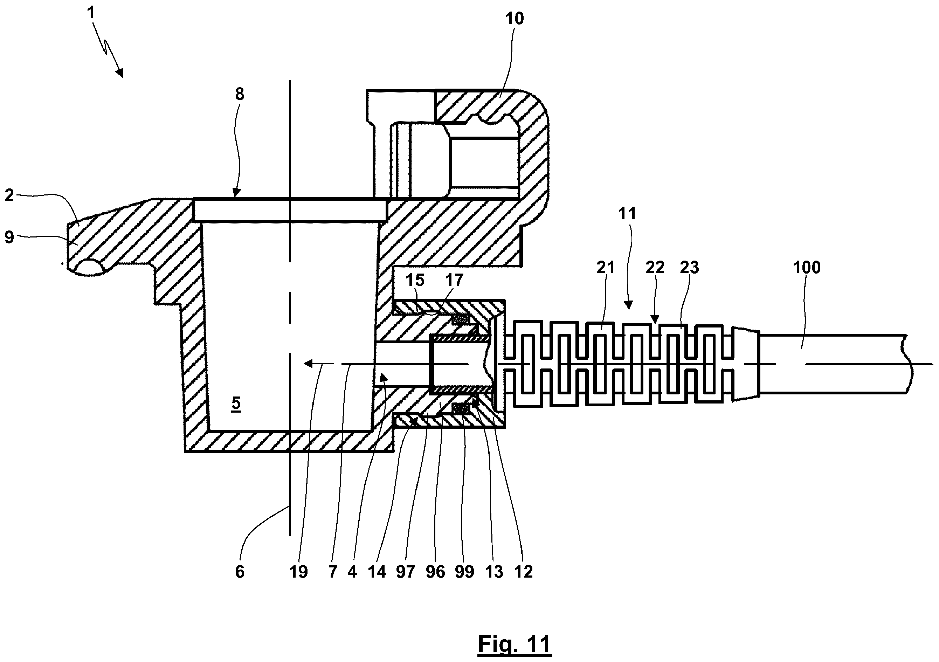

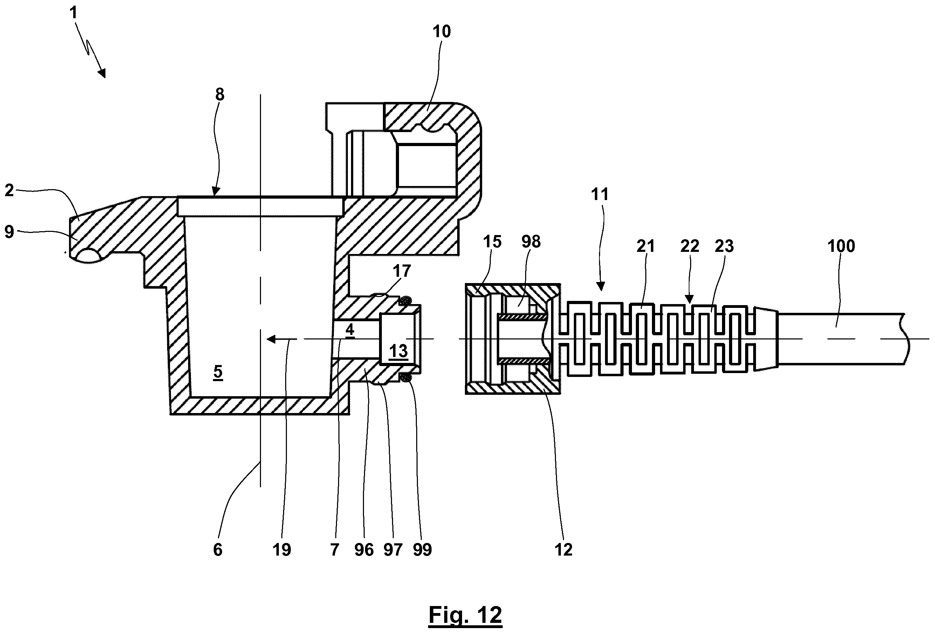

Bei der in **Fig. 11** **und** **12** gezeigten Ausführungsform weist das Gehäuse 2 des Kupplungskopfes 1 als Anschluss für die fluidische Leitung 11 einen Anschlussstutzen 96 auf, über den die fluidische Leitung 11 mittels ihres Kopplungselements 12 an den Kupplungskopf 1 angeschlossen wird. Der Anschlussstutzen 96 ist dabei eine einstückig mit dem Gehäuse 2 ausgebildete Auskragung. An seinem Außenumfang weist der Anschlussstutzen 96 eine sich radial nach außen erstreckende umlaufende Rippe 97 (oder einen nur in mindestens einem Teilumfangsbereich hervortretenden Vorsprung) auf, die den Absatz 17 der Rast- oder Sperrverbindung 14 ausbildet.

Das Kopplungselement 12 ist bei dem in Fig. 11 und 12 gezeigten Ausführungsbeispiel hülsenartig ausgebildet und weist eine Durchgangsausnehmung 98 auf. Dabei erstreckt sich das fluidische Leitungsteil 100 durch die Verstärkungshülse 21 und ragt in die Durchgangsausnehmung 98 des Kopplungselements 12 hinein. Der Durchmesser der Durchgangsausnehmung 98 im kupplungskopfseitigen Endbereich des Kopplungselements 12 ist dabei derart an den Außendurchmesser des Anschlussstutzens 96 angepasst, dass das Kopplungselement 12 auf den Anschlussstutzen 96 aufgesteckt und zumindest ein Teil des Anschlussstutzens 96 in der Durchgangsausnehmung 98 aufgenommen werden kann.

Zum Anschließen der fluidischen Leitung 11 an den Kupplungskopf 1 wird das Kopplungselement 12 in Fügerichtung 19 auf den Anschlussstutzen 96 aufgesteckt. Dabei wird das Rast- oder Sperrelement 15, das in dem kupplungskopfseitigen Endbereich des Kopplungselements 12 ausgebildet ist, nach radial außen verformt und rastet unter Ausbildung der Rast- oder Sperrverbindung 14 hinter dem Absatz 17 ein. Wie in Fig. 11 gezeigt, ragt das fluidische Leitungsteil 100 im gekoppelten Zustand in den von dem Anschlussstutzen 96 begrenzten Anschluss 13 hinein. Zur Abdichtung der Kopplung des Kopplungselements 12 mit dem Gehäuse 2 ist ein Dichtelement 99 vorgesehen, dass dichtend zwischen einer Außenfläche des Anschlussstutzens 96 und einer die Durchgangsausnehmung 98 begrenzenden Innenfläche des Kopplungselements 12 anliegt und axial zwischen einem inneren Bund des Kopplungselements 12 und einem äußeren Bund des Anschlussstutzens 96 gefangen ist. Möglich ist, dass das Kopplungselement 12 und die Verstärkungshülse 21 einstückig ausgebildet sind, ohne dass dieses zwingend der Fall ist.

### BEZUGSZEICHENLISTE

- 1: Kupplungskopf
- 2: Gehäuse
- 3: Anschlussbereich
- 4: Leitungsbereich
- 5: Kammer
- 6: Längsachse
- 7: Längsachse
- 8: Öffnung
- 9: Verbindungsteil
- 10: Gegenverbindungsteil
- 11: Leitung
- 12: Kopplungselement
- 13: Anschluss
- 14: Rast-/Sperrverbindung
- 15: Rast-/Sperrelement
- 16: Rast-/Sperrnase
- 17: Absatz
- 18: Innenfläche
- 19: Fügerichtung
- 20: Durchgangsausnehmung
- 21: Verstärkungshülse
- 22: Schlitz
- 23: Steg
- 24: Ausnehmung
- 25: Dichtelement
- 26: Innenfläche
- 27: Stirnfläche
- 28: Klemm-Schneidelement
- 29: Schneidring
- 30: Federarm
- 31: Fase
- 32: Schneidkante
- 33: Sicherungsring
- 34: Öffnung
- 35: Sicherungsnut
- 36: Außenfläche
- 37: Vertiefung
- 38: Innengewinde
- 39: Dichtelement
- 40: Tragelement
- 41: Montageausnehmung
- 42: Flansch
- 43: Anlagefläche
- 44: Anlagefläche
- 45: Durchgangsausnehmung
- 46: Haltevorsprung
- 47: Vertiefung
- 48: Ventil
- 49: Öffnung
- 50: Verschlusselement
- 51: Ventilelement
- 52: Feder
- 53: Ventilsitz
- 54: Wandung
- 55: Betätigungselement
- 56: Grundkörper
- 57: Ausnehmung
- 58: Fortsatz
- 59: Ausnehmung
- 60: Rast-/Sperrnase
- 61: Absatz
- 62: Rast-/Sperrverbindung
- 63: Innenfläche
- 64: Verbindungsabschnitt
- 65: Ausnehmung
- 66: Leitungsbereich
- 67: Rast-/Sperrverbindung
- 68: Rast-/Sperrelement
- 69: Absatz
- 70: Dichtelement
- 71: Dichtelement
- 72: Abschnitt
- 73: Durchgangsausnehmung
- 74: Trennelement
- 75: Bereich
- 76: Bereich
- 77: Dichtelement
- 78: Ausnehmung
- 79: Bund
- 80: Anschlag
- 81: Absatz
- 82: Abstandelement
- 83: Bajonettverbindung
- 84: Bund
- 85: Ausnehmung
- 86: Gegenbund
- 87: Wölbung
- 88: Fortsatz
- 89: Rast-/Sperrelement
- 90: Wölbung
- 91: Vertiefung
- 92: Vertiefung
- 93: Rast-/Sperrverbindung
- 94: Wulst
- 95: Dichtelement
- 96: Anschlussstutzen
- 97: Rippe
- 98: Durchgangsausnehmung
- 99: Dichtelement
- 100: Leitungsteil

## Patentansprüche

1. Anordnung mit einer fluidischen Leitung (11) und einem Kupplungskopf (1) zur pneumatischen Verbindung eines Zugfahrzeugs und eines Anhängers oder zur pneumatischen Verbindung von zwei Anhängern, wobei
a) der Kupplungskopf (1) ein Gehäuse (2) mit einem Anschluss (13) für die fluidische Leitung (11) und ein Verbindungsteil (9) sowie ein Gegenverbindungsteil (10), über die der Kupplungskopf (1) mit einem Gegenkupplungskopf bajonettartig verbunden werden kann, aufweist und
b) die fluidische Leitung (11) endseitig ein mit dieser verbundenes Kopplungselement (12) besitzt, über das die fluidische Leitung (11) an den Anschluss (13) des Kupplungskopfes (1) angeschlossen ist,
**dadurch gekennzeichnet, dass**
c) das Kopplungselement (12) über eine Rast- oder Sperrverbindung (14) und unter Ausbildung einer dichten Verbindung zwischen der Leitung (11) und dem Gehäuse (2) mit dem Gehäuse (2) gekoppelt ist.

2. Anordnung nach Anspruch 1, **dadurch gekennzeichnet, dass** die Rast- oder Sperrverbindung (14) ein elastisch verformbares und/oder bewegbares Rast- oder Sperrelement (15, 32) aufweist, das zum Bilden der Rast- oder Sperrverbindung (14) einen gegenüber der Fügerichtung (19) geneigten Absatz (17) hintergreift.

3. Anordnung nach Anspruch 2, **dadurch gekennzeichnet, dass**
a) eine Innenfläche (18) des Gehäuses (2), die den Anschluss (13) für die fluidische Leitung (11) begrenzt, den Absatz (18) aufweist und
b) das Rast- oder Sperrelement (15) eine am Außenumfang des Kopplungselements (12) gebildete Rast- oder Sperrnase (16) ist.

4. Anordnung nach Anspruch 2, **dadurch gekennzeichnet, dass**
a) das Rast- oder Sperrelement von dem Gehäuse (2) ausgebildet ist und
b) der Absatz (18) von dem Kopplungselement (12) ausgebildet ist.

5. Anordnung nach Anspruch 2, **dadurch gekennzeichnet, dass** das Rast- oder Sperrelement (15) ein Sicherungselement (32) ist, das zum Bilden der Rast- oder Sperrverbindung (14) in eine Vertiefung (36) eingreift, die den Absatz aufweist.

6. Anordnung nach einem der vorhergehenden Ansprüche, **dadurch gekennzeichnet, dass** an dem Kopplungselement (12) eine biegbare Verstärkungshülse (21) für ein fluidisches Leitungsteil (100) vorgesehen ist.

7. Anordnung nach Anspruch 6, **dadurch gekennzeichnet, dass** ein einstückig hergestelltes Kunststoffteil die Verstärkungshülse (21) und das Kopplungselement (12) ausbildet.

8. Anordnung nach einem der vorhergehenden Ansprüche, **dadurch gekennzeichnet, dass** das fluidische Leitungsteil (100) stoffschlüssig mit dem Kopplungselement (12) und optional mit einer/der Verstärkungshülse (21) verbunden ist.

9. Anordnung nach einem der vorhergehenden Ansprüche, **dadurch gekennzeichnet, dass** das fluidische Leitungsteil (100) formschlüssig mit dem Kopplungselement (12) und optional mit einer/der Verstärkungshülse (21)verbunden ist.

10. Anordnung nach einem der vorhergehenden Ansprüche, **dadurch gekennzeichnet, dass** das fluidische Leitungsteil (100) kraftschlüssig mit dem Kopplungselement (12) und optional mit einer/der Verstärkungshülse (21)verbunden ist.

11. Anordnung nach einem der vorhergehenden Ansprüche, **dadurch gekennzeichnet, dass**
a) das Kopplungselement (12) ein elastisch verformbares und/oder bewegbares Klemm- und/oder Schneidelement (28) aufweist und
b) eine Innenfläche (18) des Gehäuses (2), die den Anschluss (13) für die fluidische Leitung (11) begrenzt, eine Führungsfläche für das Klemm- und/oder Schneidelement (28) aufweist, die derart ausgebildet ist, dass das Klemm- und/oder Schneidelement (28) beim Fügen des Kopplungselements (12) mit dem Gehäuse (2) in Richtung des fluidischen Leitungsteils (100) verformt und/oder bewegt wird.

12. Anordnung nach einem der vorhergehenden Ansprüche, **dadurch gekennzeichnet, dass** ein Dichtelement (25, 39, 95, 99) vorgesehen ist, das dichtend an dem Gehäuse (2) und dem Kopplungselement (12) und/oder dem fluidischen Leitungsteil (100) anliegt.

13. Anordnung nach Anspruch 12, **dadurch gekennzeichnet, dass**
a) sich das fluidische Leitungsteil (100) durch das Kopplungselement (12) hindurch und derart aus diesem heraus erstreckt, dass ein Endbereich des Leitungsteils (100) in eine in dem Gehäuse (2) vorgesehene Ausnehmung (24) für die fluidische Leitung (11) hineinragt und
b) das Dichtelement (25, 95) in der Ausnehmung (24) für die fluidische Leitung (11) zwischen dem Endbereich des fluidischen Leitungsteils (100) und einer Innenfläche (26) des Gehäuses (2), die die Ausnehmung (24) für die fluidische Leitung (11) begrenzt, angeordnet ist.

14. Anordnung nach einem der vorhergehenden Ansprüche, **dadurch gekennzeichnet, dass** der Kupplungskopf (1) an einem eine Montageausnehmung (41) aufweisenden Tragelement (40) des Zugfahrzeugs oder des Anhängers montierbar ist, wobei sich das Gehäuse (2) und/oder das Kopplungselement (12) im montierten Zustand zumindest teilweise durch die Montageausnehmung (41) erstrecken/erstreckt und der Kupplungskopf (1) dadurch an dem Tragelement (40) gehalten ist, dass das Kopplungselement (12) und das Gehäuse (2) auf ihren einander gegenüberliegenden Seiten Anlageflächen (43, 44) aufweisen, die im montierten Zustand an einander gegenüberliegenden Seiten des Tragelements (40) anliegen oder zwischen denen das Tragelement (40) gefangen ist.

15. Anordnung nach Anspruch 14, **dadurch gekennzeichnet, dass** ein formschlüssiges Befestigungsmittel vorgesehen ist, über welches der Kupplungskopf (1) zumindest drehfest gegenüber einer Rotation um eine Achse parallel zur Fügerichtung (19) des Gehäuses (2) mit dem Kopplungselement (12) der fluidischen Leitung (11) an dem Tragelement (40) montierbar ist.

16. Anordnung nach Anspruch 14, **dadurch gekennzeichnet, dass** das formschlüssige Befestigungsmittel ein Haltevorsprung (45) oder Haltestift ist.

17. Anordnung nach Anspruch 15 oder 16, **dadurch gekennzeichnet, dass** ein Querschnitt der Montageausnehmung (41) in dem Tragelement (40) und ein Querschnitt eines/des Anschlusses (13) und/oder des Kopplungselements (12) in einer Projektion in Fügerichtung (19) des Kopplungselements (12) mit dem Gehäuse (2) hinsichtlich ihrer Form übereinstimmen und durch die Form der Querschnitte eine Orientierung des Kupplungskopfs (1) relativ zu dem Tragelement (40) vorgegeben ist.

## Claims

1. Arrangement comprising a fluidic conduit (11) and a coupling head (1) for pneumatically connecting a tractor and a trailer or for pneumatically connecting two trailers,
a) the coupling head (1) comprising a housing (2) having a port (13) for the fluidic conduit (11) and a connecting part (9) as well as a counter connecting part (10) by which it is possible to connect the coupling head (1) to a counter coupling head in a bayonet-like fashion and
b) the fluidic conduit (11) comprising a coupling element (12) connected thereto in an end portion, the coupling element (12) connecting the fluidic conduit (11) to the port (13) of the coupling head (1),
**characterised in that**
c) by a latching or locking connection (14) and under the establishment of a sealed connection between the conduit (11) and the housing (2) the coupling element (12) is coupled to the housing (2).

2. Arrangement of claim 1, **characterised in that** the latching or locking connection (14) comprises an elastically deformable and/or moveable latching or locking element (15, 32) which under the establishment of the latching or locking connection (14) engages behind a shoulder (17) which is inclined relative to the direction of joining (19).

3. Arrangement of claim 2, **characterised in that**
a) an inner surface (18) of the housing (2) which limits the port (13) for the fluidic conduit (11) comprises the shoulder (18) and
b) the latching or locking element (15) is a latching or locking nose (16) formed at the outer circumference of the coupling element (12).

4. Arrangement of claim 2, **characterised in that**
a) the housing (2) comprises the latching or locking element and
b) the coupling element (12) comprises the shoulder (18).

5. Arrangement of claim 2, **characterised in that** the latching or locking element (15) is a securing element (32) which for establishing the latching or locking connection (14) engages into a recess (36) which comprises the shoulder.

6. Arrangement of one of the preceding claims, **characterised in that** the coupling element (12) comprises a bendable reinforcing sleeve (21) for a fluidic conduit part (100).

7. Arrangement of claim 6, **characterised in that** a part made of plastic which is integrally manufactured forms the reinforcing sleeve (21) and the coupling element (12).

8. Arrangement according to one of the preceding claims, **characterised in that** the fluidic conduit part (100) is connected to the coupling element (12) and optionally to a/the reinforcing sleeve (21) by a material bond.

9. Arrangement of one of the preceding claims, **characterised in that** the fluidic conduit part (100) is connected to the coupling element (12) and optionally to a/the reinforcing sleeve (21) by a positive engagement or form lock.

10. Arrangement of one of the preceding claims, **characterised in that** the fluidic conduit part (100) is connected to the coupling element (12) and optionally to a/the reinforcing sleeve (21) by a frictional connection or force connection.

11. Arrangement according to one of the preceding claims, **characterised in that**
a) the coupling element (12) comprises an elastically deformable and/or moveable clamping element and/or cutting element (28) and
b) an inner surface (18) of the housing (2) which limits the port (13) for the fluidic conduit (11) comprises a guiding surface for the clamping element and/or cutting element (28), the guiding surface being designed such that the clamping and/or cutting element (28) is deformed and/or moved when joining the coupling element (12) with the housing (2) in the direction of the fluidic conduit part (100).

12. Arrangement according to one of the preceding claims, **characterised in that** a sealing element (25, 39, 95, 99) is provided that sealingly contacts the housing (2) and the coupling element (12) and/or the fluidic conduit part (100).

13. Arrangement of claim 12, **characterised in that**
a) the fluidic conduit part (100) extends through the coupling element (12) and out of the same in a way such that an end portion of the conduit part (100) protrudes into a recess (24) for the fluidic conduit (11) provided in the housing (2) and
b) the sealing element (25, 95) is arranged in the recess (24) for the fluidic conduit (11) between the end portion of the fluidic conduit part (100) and an inner surface (26) of the housing (2) which limits the recess (24) for the fluidic conduit (11).

14. Arrangement according to one of the preceding claims, **characterised in that** it is possible to assemble the coupling head (1) to a supporting element (40) of the tractor or the trailer comprising an assembly recess (41), the housing (2) and/or the coupling element (12) in the assembled state extending at least partially through the assembly recess (41) and the coupling head (1) being held at the supporting element (40) by the coupling element (12) and the housing (2) comprising contact surfaces (43, 44) being ranged on their opposing sides which in the assembled state contact opposing sides of the supporting element (40) or between which the supporting element (40) is trapped.

15. Arrangement of claim 14, **characterised in that** a positively-engaging or form-fitting mounting means is provided by which it is possible to assemble the coupling head (1) to the supporting element (40) in a way at least fixed against rotation about an axis being parallel to the direction (19) of joining the housing (2) with the coupling element (12) of the fluidic conduit (11).

16. Arrangement of claim 14, **characterised in that** the positively-engaging or form-fitting mounting means is a holding protrusion (45) or holding pin.

17. Arrangement of claim 15 or 16, **characterised in that** a cross section of the assembly recess (41) in the supporting element (40) and a cross section of a/the port (13) and/or the coupling element (12) correspond in their shapes in a projection in direction (19) of joining the coupling element (12) with the housing (2) and by the shape of the cross sections an orientation of the coupling head (1) relative to the supporting element (40) is set.

## Revendications

1. Dispositif avec une conduite de fluide (11) et une tête de couplage (1) pour la liaison pneumatique d'un véhicule tracteur et d'une remorque ou pour la liaison pneumatique de deux remorques,
a) la tête de couplage (1) comprenant un boîtier (2) avec un raccord (13) pour la conduite de fluide (11) et une pièce de liaison (9) ainsi qu'une pièce de contre-liaison (10), par l'intermédiaire desquelles la tête de couplage (1) peut être reliée à l'aide d'une baïonnette avec une tête de contre-couplage et
b) la conduite de fluide (11) comprenant, au niveau d'une extrémité, un élément de couplage (12) relié avec celle-ci, par l'intermédiaire duquel la conduite de fluide (11) est raccordé au raccord (13) de la tête de couplage (1),
**caractérisé en ce que**
c) l'élément de couplage (12) est couplé avec le boîtier (2) par l'intermédiaire d'une liaison par encliquetage ou par blocage (14) et en formant une liaison étanche entre la conduite (11) et le boîtier (2).

2. Dispositif selon la revendication 1, **caractérisé en ce que** la liaison par encliquetage ou par blocage (14) comprend un élément d'encliquetage ou de blocage (15, 32) déformable élastiquement et/ou mobile qui s'accroche, pour la formation de la liaison par encliquetage ou par blocage (14), à un épaulement (17) incliné par rapport à la direction d'assemblage (19).

3. Dispositif selon la revendication 2, **caractérisé en ce que**
a) une surface interne (18) du boîtier (2), qui délimite le raccord (13) pour la conduite de fluide (11), comprend l'épaulement (18) et
b) l'élément d'encliquetage ou de blocage (15) est un embout d'encliquetage ou de blocage (16) formé sur la circonférence externe de l'élément de couplage (12).

4. Dispositif selon la revendication 2, **caractérisé en ce que**
a) l'élément d'encliquetage ou de blocage est formé par le boîtier (2) et
b) l'épaulement (18) est formé par l'élément de couplage (12).

5. Dispositif selon la revendication 2, **caractérisé en ce que** l'élément d'encliquetage ou de blocage (15) est un élément de sécurisation (32) qui s'emboîte, pour la formation de la liaison par encliquetage ou par blocage (14), dans un creux (36) qui comprend l'épaulement.

6. Dispositif selon l'une des revendications précédentes, **caractérisé en ce que**, sur l'élément de couplage (12) est prévu un manchon de renfort (21) pour une partie de conduite de fluide (100).

7. Dispositif selon la revendication 6, **caractérisé en ce qu'**une pièce en matière plastique formée d'une seule pièce constitué le manchon de renfort (21) et l'élément de couplage (12).

8. Dispositif selon l'une des revendications précédentes, **caractérisé en ce que** la partie de conduite de fluide (100) est reliée par liaison de matière avec l'élément de couplage (12) et en option avec un/le manchon de renfort (21).

9. Dispositif selon l'une des revendications précédentes, **caractérisé en ce que** la partie de conduite de fluide (100) est reliée par complémentarité de forme avec l'élément de couplage (12) et en option avec un/le manchon de renfort (21).

10. Dispositif selon l'une des revendications précédentes, **caractérisé en ce que** la partie de conduite de fluide (100) est reliée par force avec l'élément de couplage (12) et en option avec un/le manchon de renfort (21).

11. Dispositif selon l'une des revendications précédentes, **caractérisé en ce que**
a) l'élément de couplage (12) comprend un élément de serrage et/ou de coupe (28) déformable élastiquement et/ou mobile et
b) une surface interne (18) du boîtier (2), qui délimite le raccord (13) pour la conduite de fluide (11), comprend une surface de guidage pour l'élément de serrage et/ou de coupe (28) qui est conçu de façon à ce que l'élément de serrage et/ou de coupe (28) est déformé et/ou déplacé lors de l'assemblage de l'élément de couplage (12) avec le boîtier (2) en direction de la partie de conduite de fluide (100).

12. Dispositif selon l'une des revendications précédentes, **caractérisé en ce qu'**un élément d'étanchéité (25, 39, 95, 99) est prévu, qui s'appuie de manière étanche contre le boîtier (2) et l'élément de couplage (12) et/ou la partie de conduite de fluide (100).

13. Dispositif selon la revendication 12, **caractérisé en ce que**
a) la partie de conduite de fluide (100) s'étend à travers l'élément de couplage (12) et s'étend hors de celui-ci de façon à ce qu'une zone d'extrémité de la partie de conduite (100) dépasse dans un évidement (24) prévu dans le boîtier (2) pour la conduite de fluide (11) et
b) l'élément d'étanchéité (25, 95) est disposé dans l'évidement (24) pour la conduite de fluide (11) entre la zone d'extrémité de la partie de conduite de fluide (100) et une surface interne (26) du boîtier (2), qui délimite l'évidement (24) pour la conduite de fluide (11).

14. Dispositif selon l'une des revendications précédentes, **caractérisé en ce que** la tête de couplage (1) peut être montée sur un élément porteur (40) du véhicule tracteur ou de la remorque comprenant un évidement de montage (41), le boîtier (2) et/ou l'élément de couplage (12) s'étendant, dans l'état monté, au moins partiellement à travers l'évidement de montage (41) et la tête de couplage (1) étant ainsi maintenue sur l'élément porteur (40), **en ce que** l'élément de couplage (12) et le boîtier (2) comprennent, sur leurs côtés opposés entre eux, des surfaces d'appui (43, 44) qui s'appuient, dans l'état monté, contre des côtés opposés entre eux de l'élément porteur (40) ou l'élément porteur (40) est coincé entre eux.

15. Dispositif selon la revendication 14, **caractérisé en ce qu'**un moyen de fixation par complémentarité de forme est prévu, par l'intermédiaire duquel la tête de couplage (1) peut être montée de manière au moins sécurisée contre une rotation autour d'un axe parallèlement à la direction d'assemblage (19) du boîtier (2) avec l'élément de coupage (12) de la conduite de fluide (11) sur l'élément porteur (40).

16. Dispositif selon la revendication 14, **caractérisé en ce que** le moyen de fixation par complémentarité de forme est une saillie de maintien (45) ou une goupille de maintien.

17. Dispositif selon la revendication 15 ou 16, **caractérisé en ce qu'**une section transversale de l'évidement de montage (41) dans l'élément porteur (40) et une section transversale d'un / du raccord (13) et/ou de l'élément de couplage (12) coïncident dans une projection dans la direction d'assemblage (19) de l'élément de couplage (12) avec le boîtier (2) en ce qui concerne leur forme et une orientation de la tête de couplage (1) par rapport à l'élément porteur (40) est prédéterminée par la forme des sections transversales.
